# EUROPEAN PATENT APPLICATION

(11) **EP 4 697 269 A1**
(43) Date of publication of application: **18.02.2026**
(21) Application number: 24788477.8
(22) Date of filing: 07.03.2024
(51) Int. Cl.: G06T 9/00

(54) **DECODING METHOD, ENCODING METHOD, DECODING DEVICE, AND ENCODING DEVICE**

(30) Priority: 11.04.2023 US 202363458490 P; 26.09.2023 US 202363540433 P
(71) Applicant: Panasonic Intellectual Property Corporation of America, Torrance, CA 90504 (US)
(72) Inventor: ITO, Atsushi, kadoma-shi, Osaka 571-0057 (JP); SUGIO, Toshiyasu, kadoma-shi, Osaka 571-0057 (JP); IGUCHI, Noritaka, kadoma-shi, Osaka 571-0057 (JP); NISHI, Takahiro, kadoma-shi, Osaka 571-0057 (JP)
(74) Representative: Grünecker Patent- und Rechtsanwälte PartG mbB
(86) International application number: PCT/JP2024/008878
(87) International publication number: WO 2024/214447

(57) **Abstract**

A decoding method includes: receiving a bitstream including geometry information and first control information (S301), the geometry information indicating nodes constituting an octree structure, the first control information indicating whether a first face of a first node included in the nodes includes a first face vertex provided on the first face except for first edges of the first face; and generating or not generating the first face vertex on the first face according to the first control information (S302). Each of the nodes is a unit for containing three-dimensional points. The first node includes a first centroid vertex and first edge vertices that are used in TriSoup scheme. The first face vertex, the first centroid vertex, and the first edge vertices define a triangle on which three-dimensional points in the first node are disposed. The first control information is provided for a face of the first node that satisfies a predetermined condition.

## Description

### [Technical Field]

The present disclosure relates to a decoding method, an encoding method, a decoding device, and an encoding device.

### [Background Art]

Devices or services utilizing three-dimensional data are expected to find their widespread use in a wide range of fields, such as computer vision that enables autonomous operations of cars or robots, map information, monitoring, infrastructure inspection, and video distribution. Three-dimensional data is obtained through various means including a distance sensor such as a rangefinder, as well as a stereo camera and a combination of a plurality of monocular cameras.

Methods of representing three-dimensional data include a method known as a point cloud scheme that represents the shape of a three-dimensional structure by a point cloud in a three-dimensional space. In the point cloud scheme, the positions and colors of a point cloud are stored. While point cloud is expected to be a mainstream method of representing three-dimensional data, a massive amount of data of a point cloud necessitates compression of the amount of three-dimensional data by encoding for accumulation and transmission, as in the case of a two-dimensional moving picture (examples include Moving Picture Experts Group-4 Advanced Video Coding (MPEG-4 AVC) and High Efficiency Video Coding (HEVC) standardized by MPEG).

Meanwhile, point cloud compression is partially supported by, for example, an open-source library (Point Cloud Library) for point cloud-related processing.

Furthermore, a technique for searching for and displaying a facility located in the surroundings of the vehicle by using three-dimensional map data is known (see, for example, Patent Literature (PTL) 1).

### [Citation List]

### [Patent Literature]

[PTL 1] International Publication WO 2014/020663

### [Summary of Invention]

### [Technical Problem]

In such three-dimensional data encoding and three-dimensional data decoding, there has been a demand for reducing the data volume of a bitstream generated.

The present disclosure provides a decoding method, an encoding method, a decoding device, or an encoding device that makes it possible to reduce the data volume of a bitstream.

### [Solution to Problem]

A decoding method according to one aspect of the present disclosure comprising: receiving a bitstream including geometry information and first control information, the geometry information indicating nodes constituting an octree structure, the first control information indicating whether a first face of a first node included in the nodes includes a first face vertex provided on the first face except for first edges of the first face; and generating or not generating the first face vertex on the first face according to the first control information, wherein each of the nodes is a unit for containing three-dimensional points, the first node includes a first centroid vertex and first edge vertices that are used in a TriSoup scheme, the first face vertex, the first centroid vertex, and the first edge vertices define a triangle on which three-dimensional points in the first node are disposed, and the first control information is provided for a face of the first node that satisfies a predetermined condition.

An encoding method according to one aspect of the present disclosure comprising: generating geometry information indicating nodes constituting an octree structure; generating first control information indicating whether a first face of a first node included in the nodes includes a first face vertex provided on the first face except for first edges of the first face; and generating a bitstream including the geometry information and the first control information, wherein each of the nodes is a unit for containing three-dimensional points, the first node includes a first centroid vertex and first edge vertices that are used in a TriSoup scheme, the first face vertex, the first centroid vertex, and the first edge vertices define a triangle on which three-dimensional points in the first node are disposed, and the first control information is provided for a face of the first node that satisfies a predetermined condition.

### [Advantageous Effects of Invention]

The present disclosure can provide a decoding method, an encoding method, a decoding device, or an encoding device that makes it possible to reduce the data volume of a bitstream.

### [Brief Description of Drawings]

[FIG. 1]

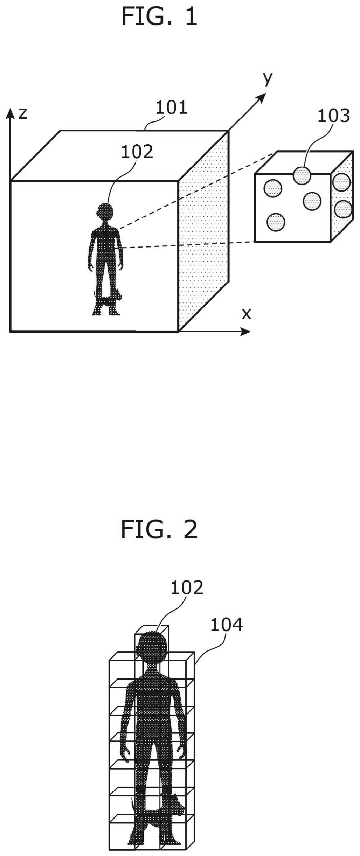

   FIG. 1 is a diagram illustrating an example of an original point cloud according to Embodiment 1.
[FIG. 2]
   FIG. 2 is a diagram illustrating an example of a trimmed octree according to Embodiment 1.
[FIG. 3]

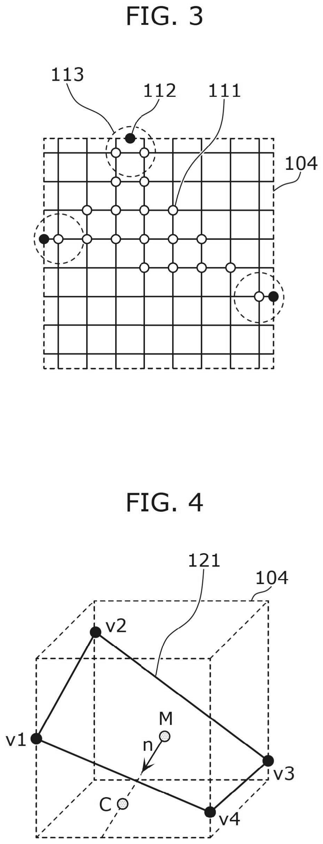

   FIG. 3 is a diagram illustrating an example in which a leaf-node according to Embodiment 1 is two-dimensionally displayed.
[FIG. 4]
   FIG. 4 is a diagram for describing a method for generating a centroid vertex according to Embodiment 1.
[FIG. 5]

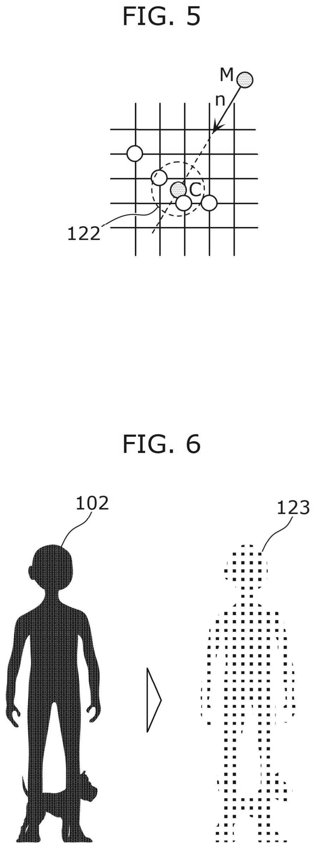

   FIG. 5 is a diagram for describing the method for generating a centroid vertex according to Embodiment 1.
[FIG. 6]
   FIG. 6 is a diagram illustrating an example of vertex information according to Embodiment 1.
[FIG. 7]

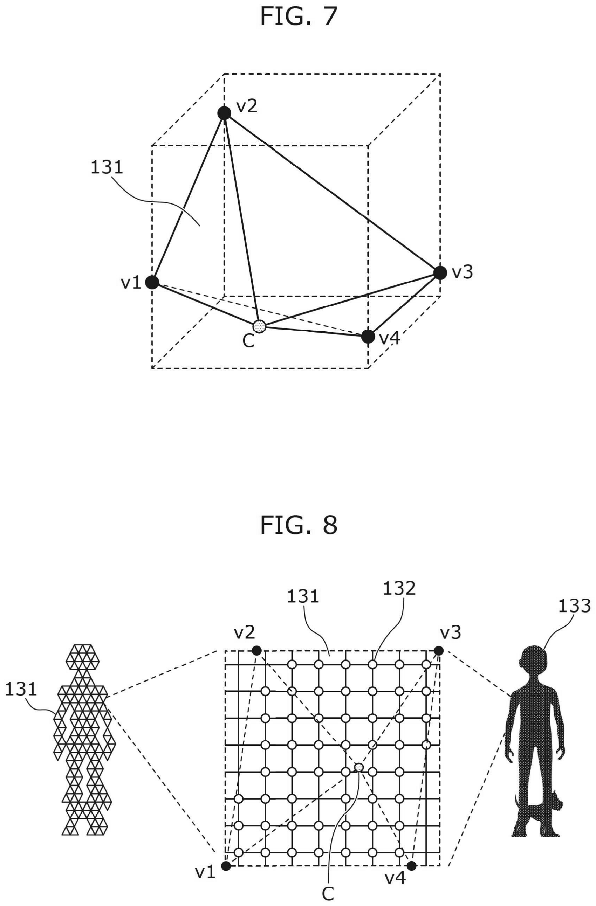

   FIG. 7 is a diagram illustrating an example of a TriSoup surface according to Embodiment 1.
[FIG. 8]
   FIG. 8 is a diagram for describing point cloud reconstruction processing according to Embodiment 1.
[FIG. 9]

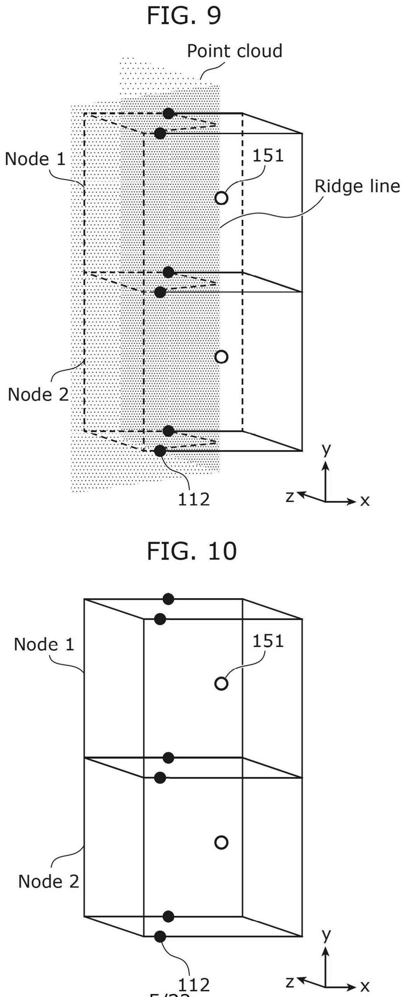

   FIG. 9 is a diagram illustrating an example of a point cloud according to Embodiment 1.
[FIG. 10]
   FIG. 10 is a diagram illustrating an example of centroid vertex generation according to Embodiment 1.
[FIG. 11]

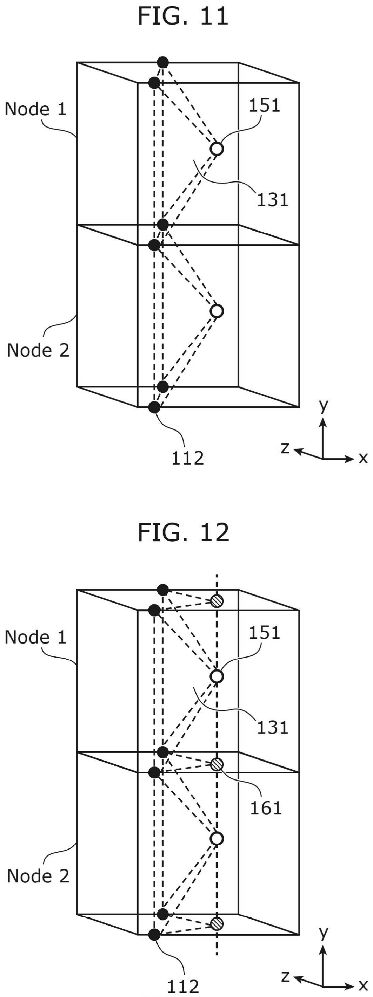

   FIG. 11 is a diagram illustrating an example of triangle (TriSoup surface) generation according to Embodiment 1.
[FIG. 12]
   FIG. 12 is a diagram illustrating an example of face vertex generation according to Embodiment 1.
[FIG. 13]

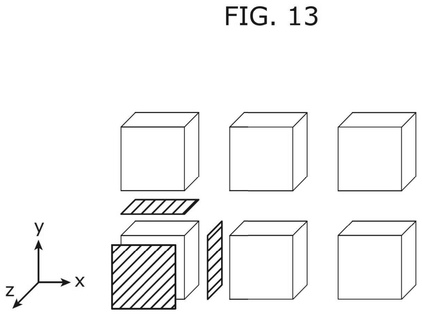

   FIG. 13 is a diagram illustrating an example of surfaces about which the connectivity evaluation and reconstruction of the centroid vertex are performed according to Embodiment 1.
[FIG. 14]

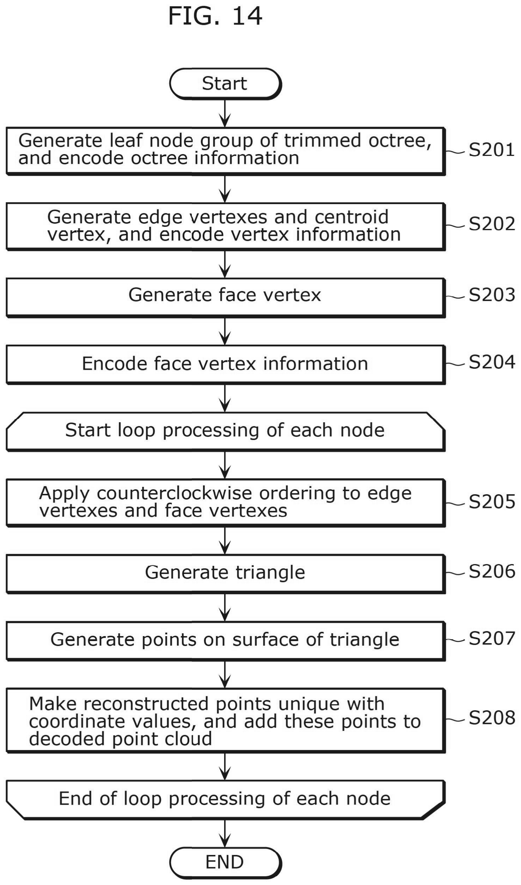

   FIG. 14 is a flowchart of encoding processing according to Embodiment 1.
[FIG. 15]

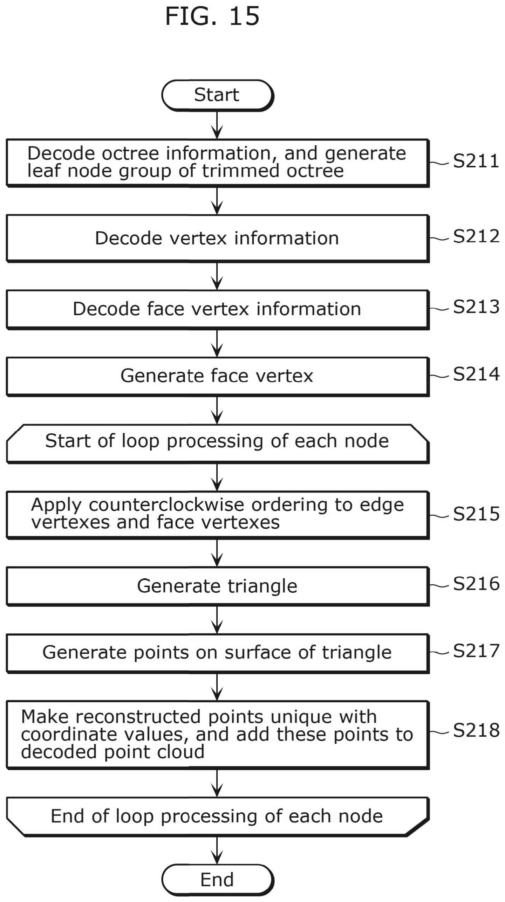

   FIG. 15 is a flowchart of decoding processing according to Embodiment 1.
[FIG. 16]

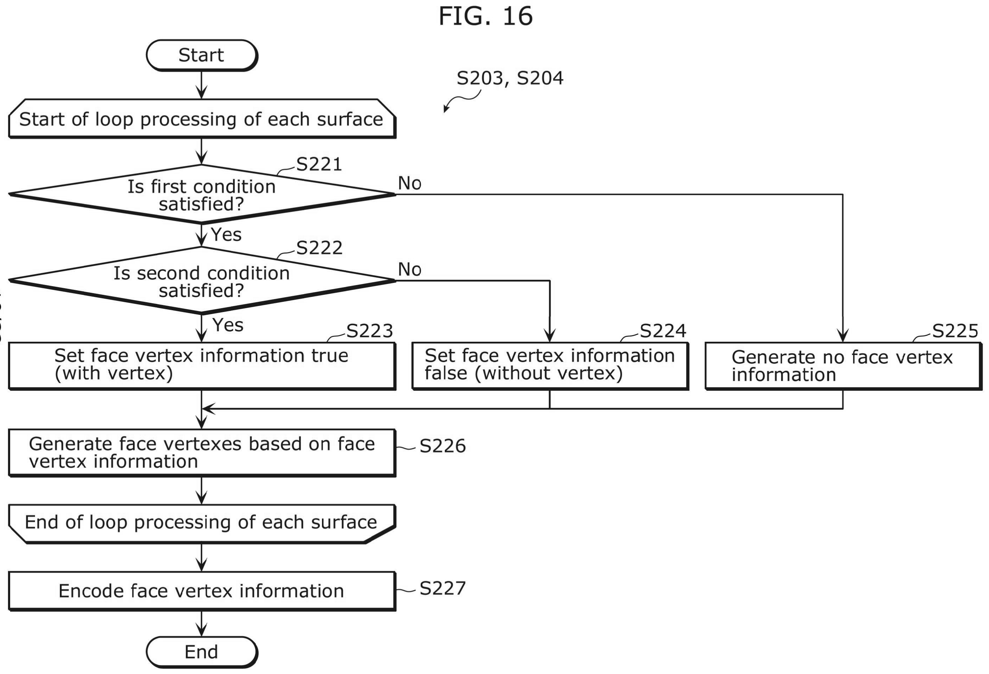

   FIG. 16 is a flowchart of propagation processing of face vertex information according to Embodiment 1.
[FIG. 17]

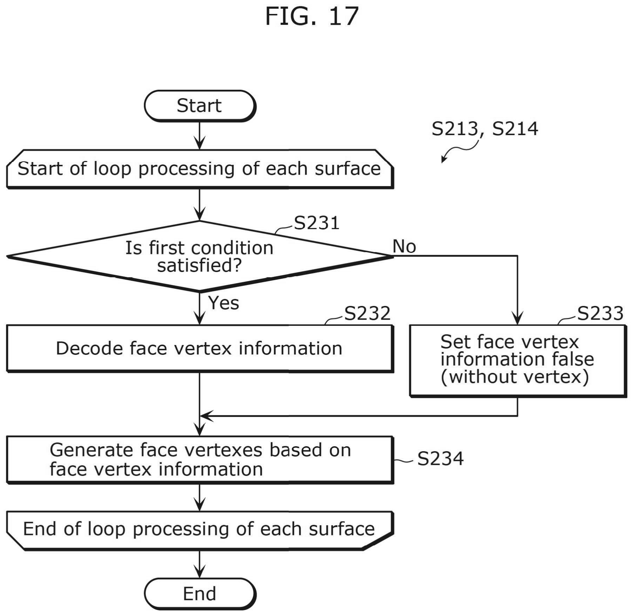

   FIG. 17 is a flowchart of decoding processing of face vertex information according to Embodiment 1.
[FIG. 18]

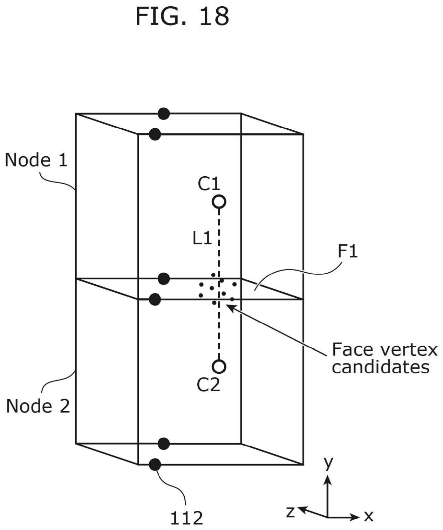

   FIG. 18 is a diagram illustrating an example of a face vertex candidate according to Embodiment 1.
[FIG. 19]

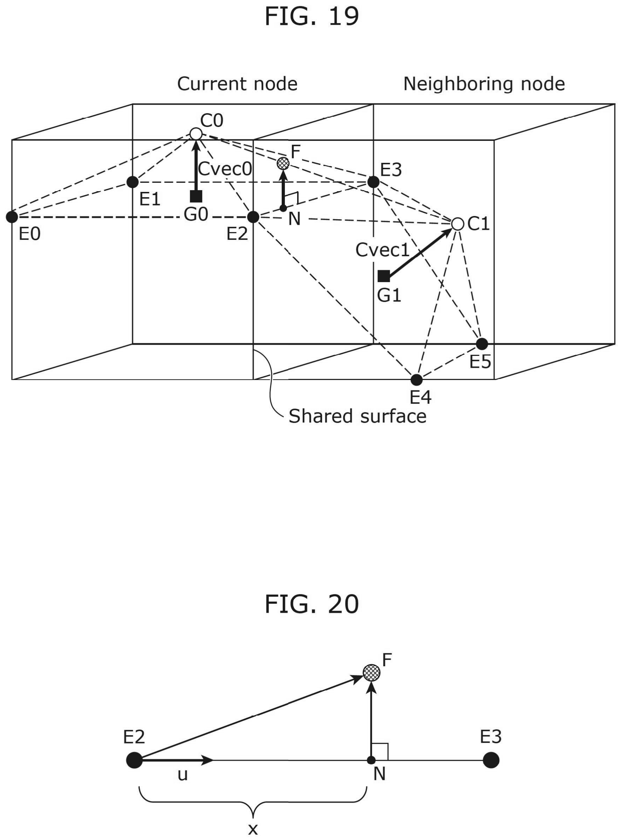

   FIG. 19 is a diagram illustrating an example arrangement of a vertex group according to Embodiment 1.
[FIG. 20]
   FIG. 20 is a diagram illustrating vector NF according to Embodiment 1.
[FIG. 21]

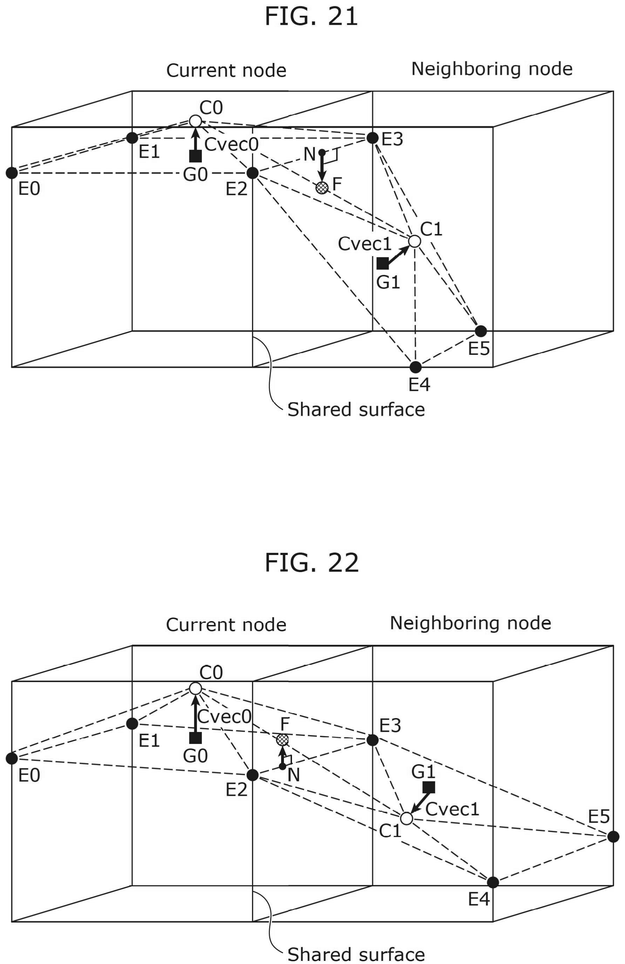

   FIG. 21 is a diagram illustrating an example arrangement of a vertex group according to Embodiment 1.
[FIG. 22]
   FIG. 22 is a diagram illustrating an example arrangement of a vertex group according to Embodiment 1.
[FIG. 23]

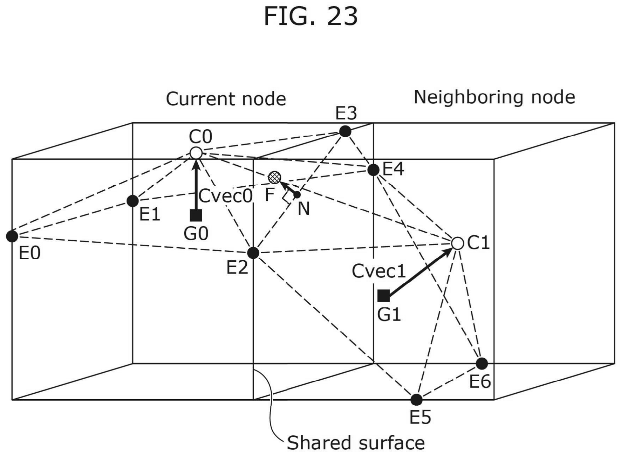

   FIG. 23 is a diagram illustrating an example arrangement of a vertex group according to Embodiment 1.
[FIG. 24]

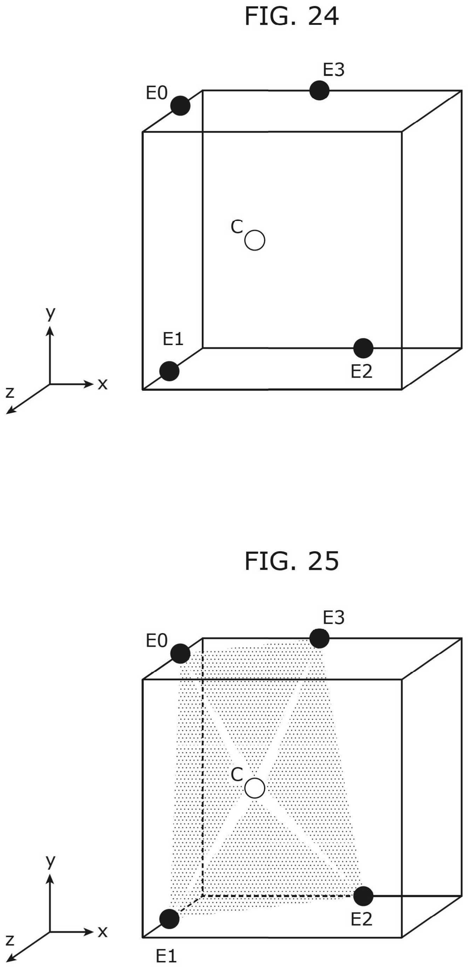

   FIG. 24 is a diagram illustrating an example of edge vertices and a centroid vertex according to Embodiment 1.
[FIG. 25]
   FIG. 25 is a diagram illustrating an example of correctly generated triangles according to Embodiment 1.
[FIG. 26]

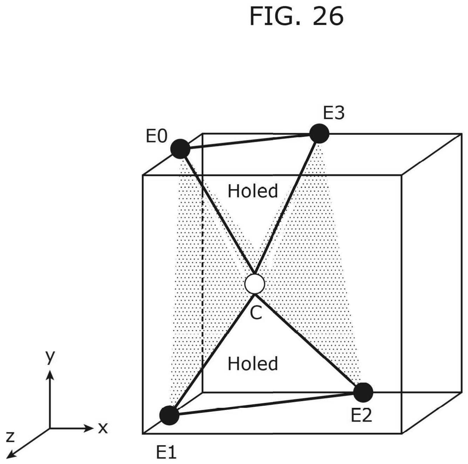

   FIG. 26 is a diagram illustrating an example of incorrectly generated triangles according to Embodiment 1.
[FIG. 27]

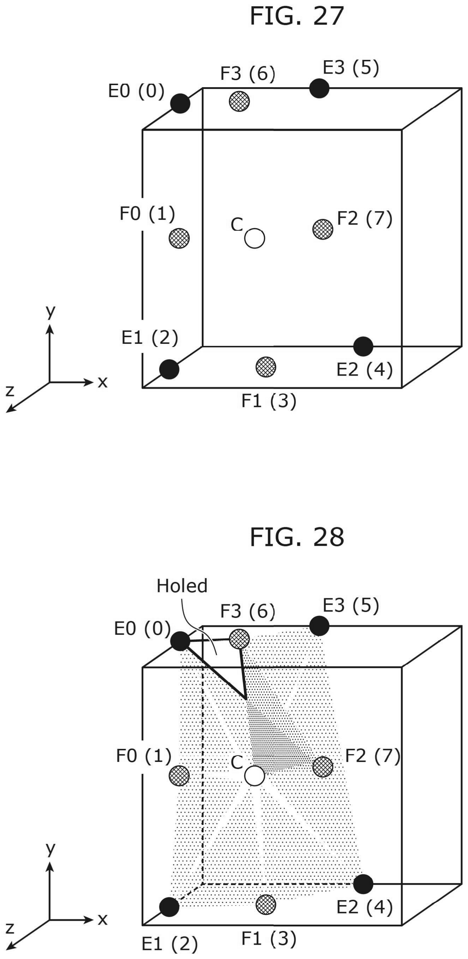

   FIG. 27 is a diagram illustrating an example of edge vertices, a centroid vertex, and face vertices according to Embodiment 1.
[FIG. 28]
   FIG. 28 is a diagram illustrating an example of triangle generation in a case where simple ordering according to Embodiment 1 is applied.
[FIG. 29]

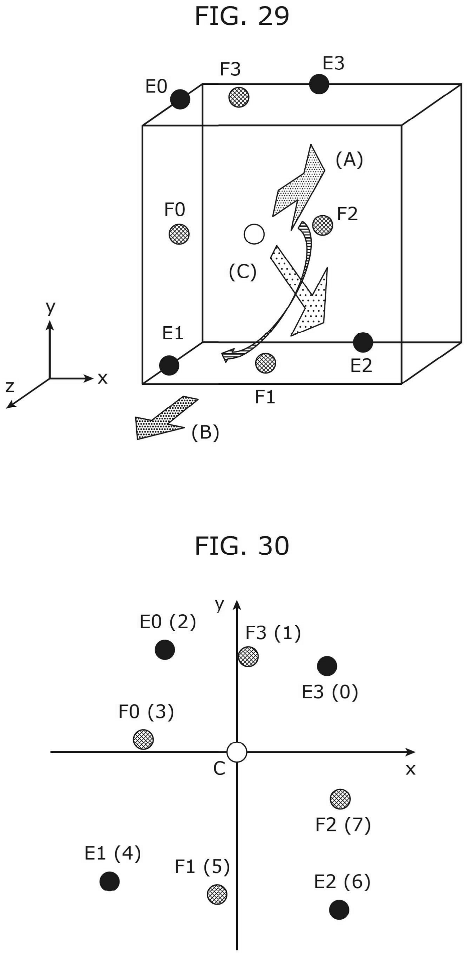

   FIG. 29 is a diagram for describing ordering processing according to Embodiment 1.
[FIG. 30]
   FIG. 30 is a diagram for describing ordering processing according to Embodiment 1.
[FIG. 31]

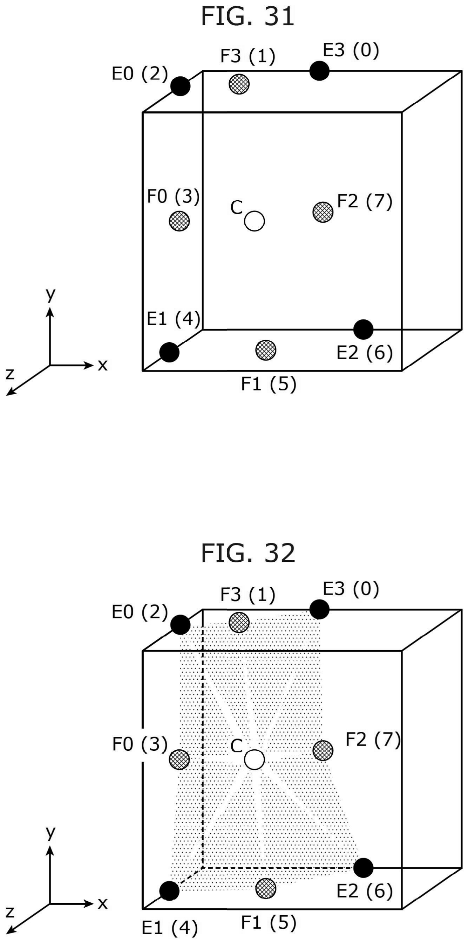

   FIG. 31 is a diagram for describing ordering processing according to Embodiment 1.
[FIG. 32]
   FIG. 32 is a diagram for describing ordering processing according to Embodiment 1.
[FIG. 33]

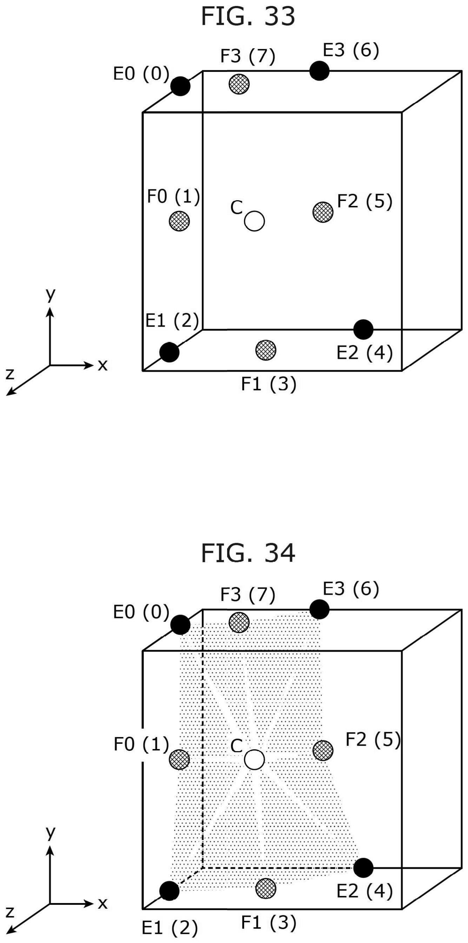

   FIG. 33 is a diagram for describing another method of ordering processing according to Embodiment 1.
[FIG. 34]
   FIG. 34 is a diagram for describing the other method of ordering processing according to Embodiment 1.
[FIG. 35]

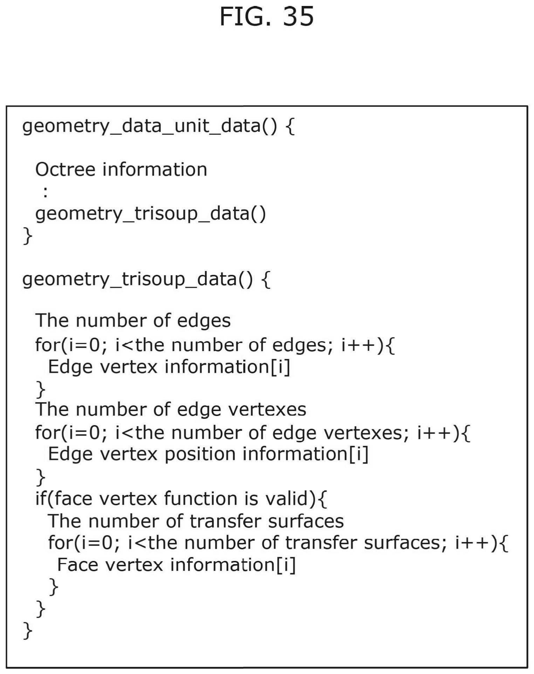

   FIG. 35 is a diagram illustrating an example of a syntax of GDU according to Embodiment 1.
[FIG. 36]

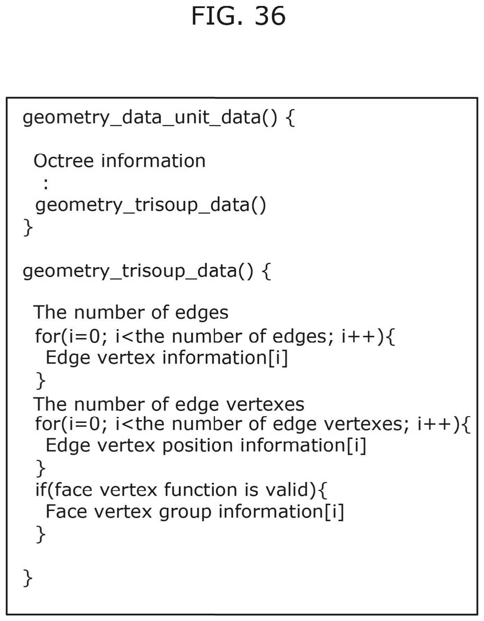

   FIG. 36 is a diagram illustrating a variation of a syntax of GDU according to Embodiment 1.
[FIG. 37]

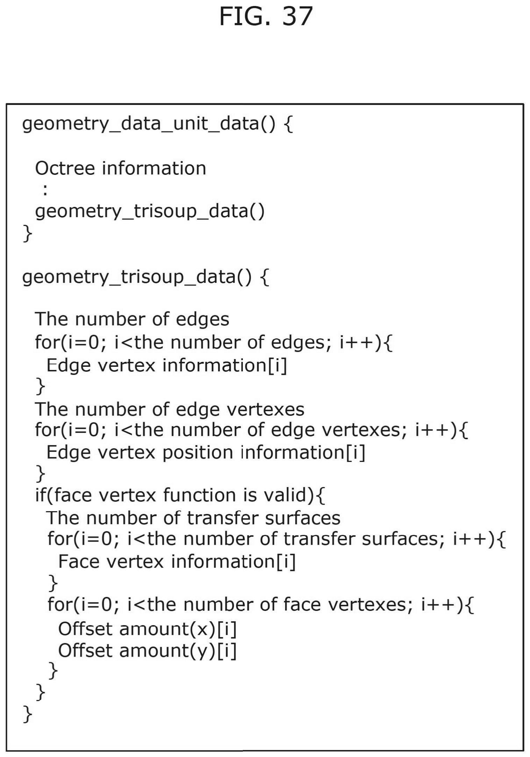

   FIG. 37 is a diagram illustrating a variation of a syntax of GDU according to Embodiment 1.
[FIG. 38]

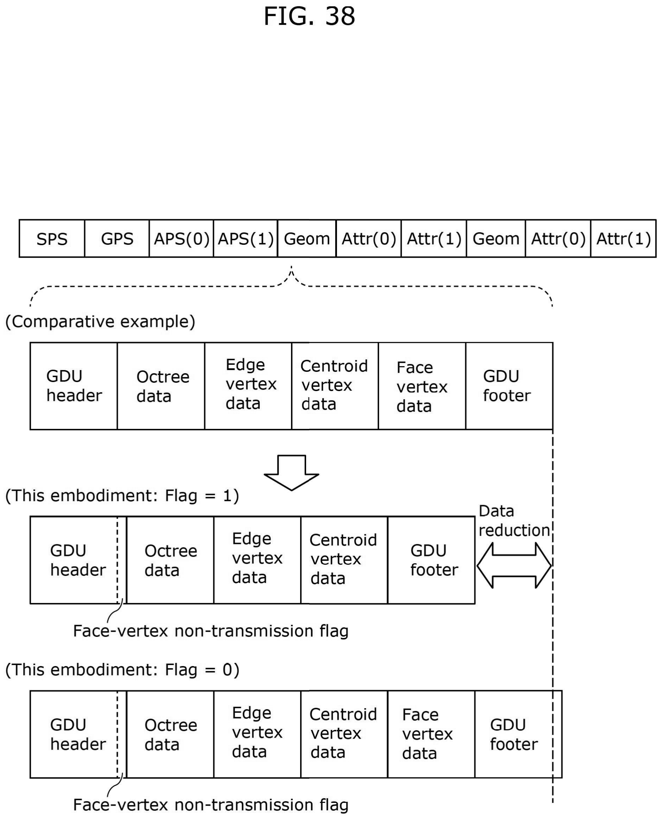

   FIG. 38 is a diagram illustrating a configuration example of a bitstream according to Embodiment 2.
[FIG. 39]

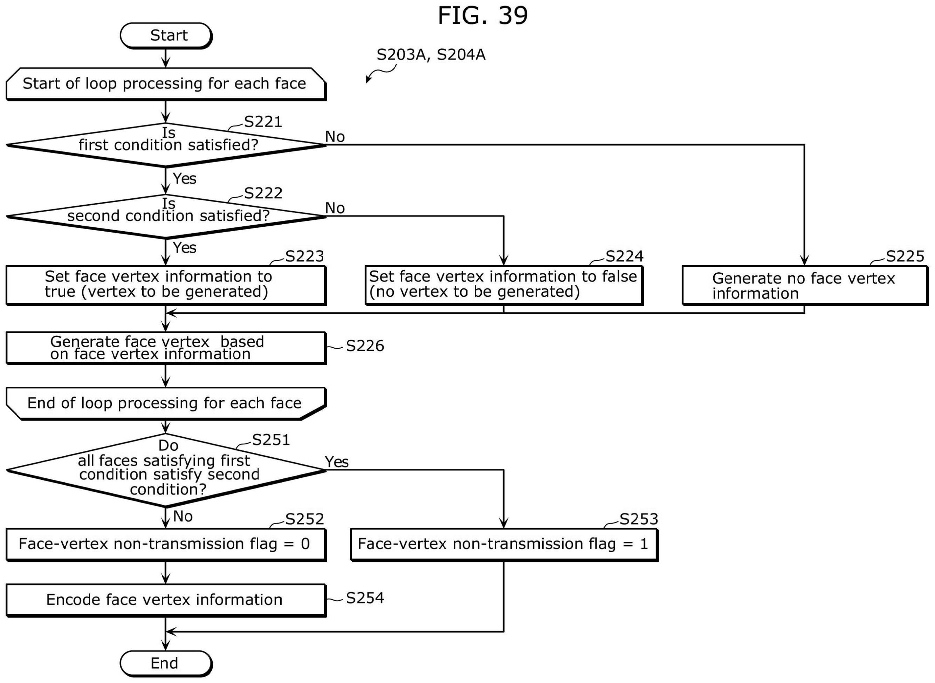

   FIG. 39 is a flowchart of the process of transmitting face vertex information according to Embodiment 2.
[FIG. 40]

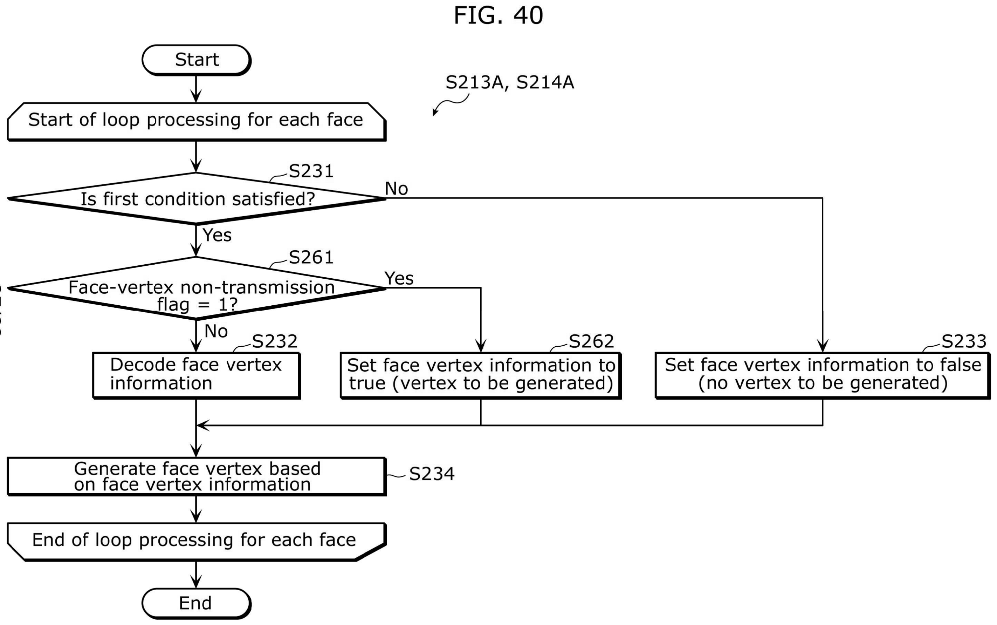

   FIG. 40 is a flowchart of the process of decoding the face vertex information according to Embodiment 2.
[FIG. 41]

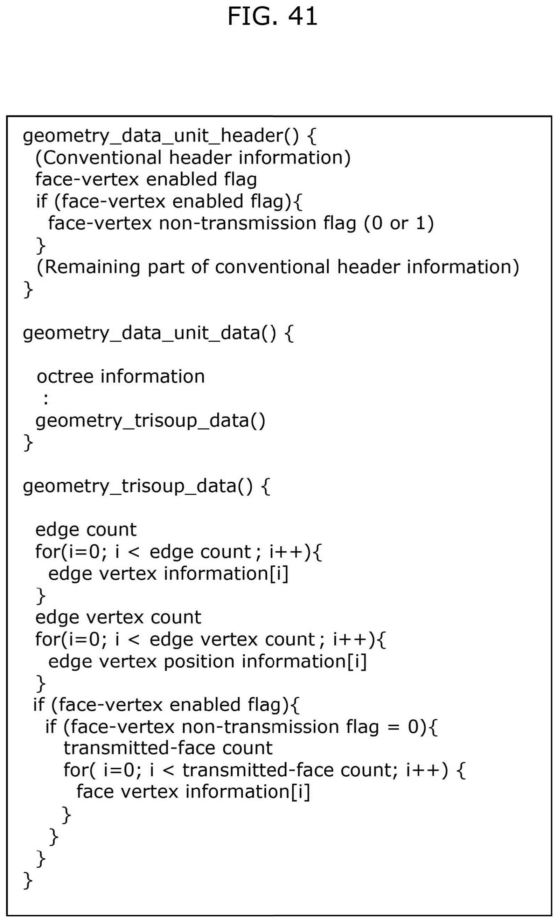

   FIG. 41 is a diagram illustrating a syntax example of a GDU header and a GDU according to Embodiment 2.
[FIG. 42]

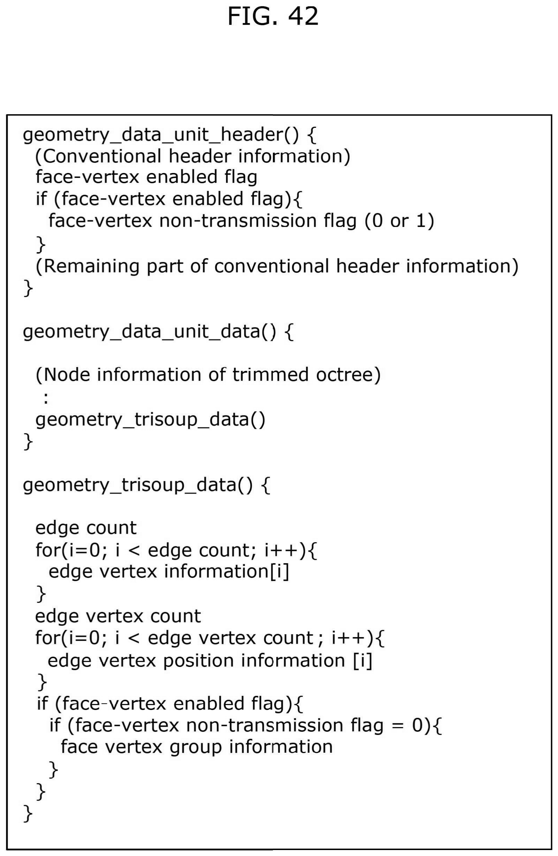

   FIG. 42 is a diagram illustrating a variation of the syntax of the GDU header and the GDU according to Embodiment 2.
[FIG. 43]

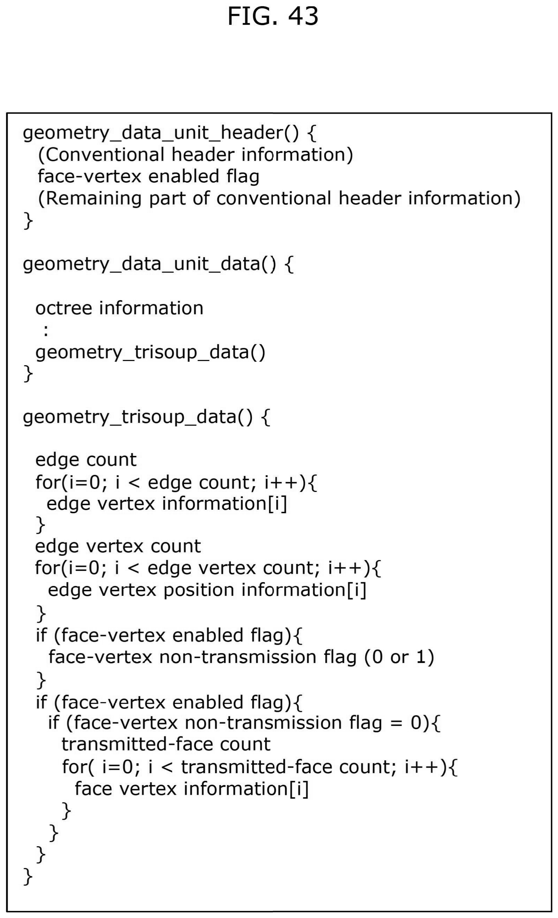

   FIG. 43 is a diagram illustrating a variation of the syntax of the GDU header and the GDU according to Embodiment 2.
[FIG. 44]

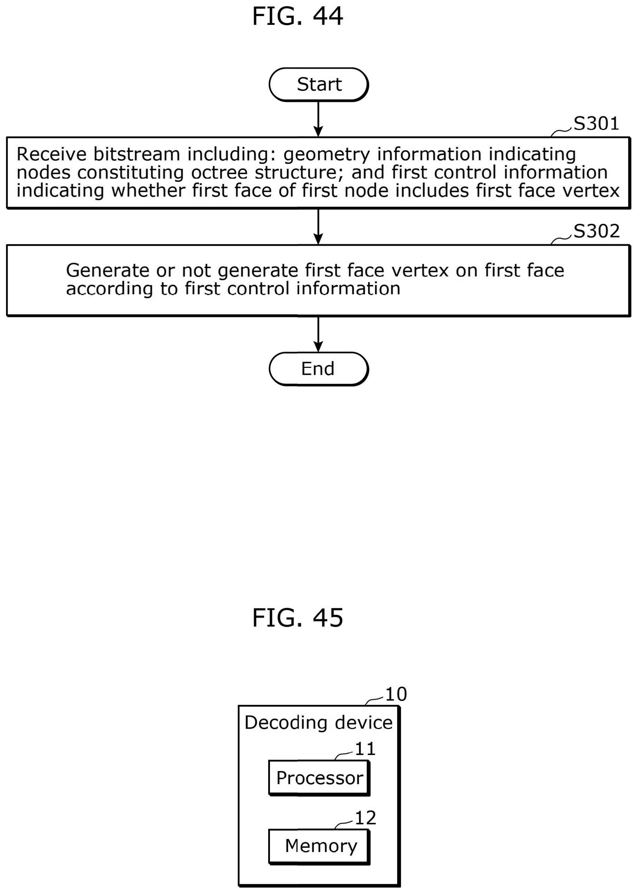

   FIG. 44 is a flowchart of a decoding process according to an embodiment.
[FIG. 45]
   FIG. 45 is a block diagram of a decoding device according to an embodiment.
[FIG. 46]

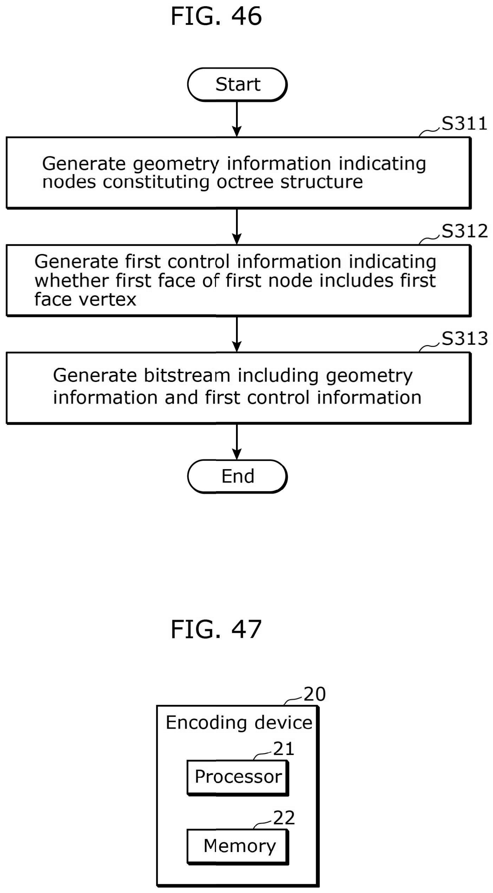

   FIG. 46 is a flowchart of an encoding process according to an embodiment.
[FIG. 47]
   FIG. 47 is a block diagram of an encoding device according to an embodiment.

### [Description of Embodiments]

A decoding method according to one aspect of the present disclosure includes: receiving a bitstream including geometry information and first control information, the geometry information indicating nodes constituting an octree structure, the first control information indicating whether a first face of a first node included in the nodes includes a first face vertex provided on the first face except for first edges of the first face; and generating or not generating the first face vertex on the first face according to the first control information. Each of the nodes is a unit for containing three-dimensional points. The first node includes a first centroid vertex and first edge vertices that are used in a TriSoup scheme. The first face vertex, the first centroid vertex, and the first edge vertices define a triangle on which three-dimensional points in the first node are disposed. The first control information is provided for a face of the first node that satisfies a predetermined condition.

Thus, the first control information is provided for a face that satisfies a predetermined condition, reducing the data volume of the bitstream compared to the first control information provided for all the faces. This reduces processing load on a decoding device.

For example, the predetermined condition may include a first condition whether the face includes two or three edge vertices. Thus, if no face vertex is likely to be generated, the generation of the first control information is omitted. This reduces the data volume of the bitstream.

For example, the predetermined condition may include a second condition whether a first vector, a second vector, and a third vector point in a same direction. The first vector may be a vector from a first center of the first edge vertices to the first centroid vertex. The second vector may be a vector from a second center of second edge vertices of a second node to a second centroid vertex of the second node, the second node being adjacent to the first node with the face in contact with the second node. The third vector may be a vector from a first line to a tentative face vertex, the first line connecting two edge vertices of the face, the tentative face vertex being disposed in a position at which a second line connecting the first centroid vertex and the second centroid vertex intersects the face. Thus, if no face vertex is likely to be generated, the generation of the first control information is omitted. This reduces the data volume of the bitstream.

For example, when an inner product of the first vector and the third vector is positive and an inner product of the second vector and the third vector is positive, the first vector, the second vector, and the third vector may be determined to point in the same direction. Thus, the decoding device can appropriately determine whether the above second condition is satisfied.

For example, the predetermined condition may include a third condition whether an adjacent node adjacent to the first node includes a centroid vertex. Thus, if no face vertex is likely to be generated, the generation of the first control information is omitted. This reduces the data volume of the bitstream.

For example, whether the first face includes the first face vertex indicated in the first control information may be determined according to whether a total number or a density of points included in a region located within a predetermined distance from an intersection point is at least a predetermined threshold value, the intersection point being a point of intersection between (i) a line segment connecting the first centroid vertex and a second centroid vertex of a second node adjacent to the first node and (ii) a face shared by the first node and the second node. Thus, whether the face vertex is to be generated is appropriately specified.

For example, the bitstream may further include second control information indicating whether the first control information for faces of the first node is included in the bitstream. Thus, the decoding device can refer to the second control information to switch between performing and not performing face vertex generation processing using the first control information.

For example, the decoding method may further include: generating or not generating a face vertex on a face to be processed, according to the first control information corresponding to the face to be processed among the faces, when the second control information indicates that the first control information for the faces of the first node is included in the bitstream; and generating a face vertex on each of the faces when the second control information does not indicate that the first control information for the faces of the first node is included in the bitstream.

Accordingly, when the face vertex is included on each of the faces, the bitstream need not include the first control information. Thus, the data volume of the bitstream can be reduced.

For example, when, among the faces of the first node, all faces that satisfy the predetermined condition satisfy an other predetermined condition, the second control information need not indicate that the first control information for the faces of the first node is included in the bitstream. Accordingly, for example, when the face vertex is generated on each of the faces that satisfy the predetermined condition, the bitstream need not include the first control information. Thus, the data volume of the bitstream can be reduced.

An encoding method according to one aspect of the present disclosure includes: generating geometry information indicating nodes constituting an octree structure; generating first control information indicating whether a first face of a first node included in the nodes includes a first face vertex provided on the first face except for first edges of the first face; and generating a bitstream including the geometry information and the first control information. Each of the nodes is a unit for containing three-dimensional points. The first node includes a first centroid vertex and first edge vertices that are used in a TriSoup scheme. The first face vertex, the first centroid vertex, and the first edge vertices define a triangle on which three-dimensional points in the first node are disposed. The first control information is provided for a face of the first node that satisfies a predetermined condition.

Thus, providing the first control information for a face that satisfies a predetermined condition reduces the data volume of the bitstream, compared to providing the first control information for all the faces.

A decoding device according to one aspect of the present disclosure is a decoding device that decodes three-dimensional points, and includes: a processor and memory. Using the memory, the processor: receives a bitstream including geometry information and first control information, the geometry information indicating nodes constituting an octree structure, the first control information indicating whether a first face of a first node included in the nodes includes a first face vertex provided on the first face except for first edges of the first face; and generates or does not generate the first face vertex on the first face according to the first control information. Each of the nodes is a unit for containing three-dimensional points. The first node includes a first centroid vertex and first edge vertices that are used in a TriSoup scheme. The first face vertex, the first centroid vertex, and the first edge vertices define a triangle on which three-dimensional points in the first node are disposed. The first control information is provided for a face of the first node that satisfies a predetermined condition.

An encoding device according to one aspect of the present disclosure is an encoding device that encodes three-dimensional points, and includes a processor and memory. Using the memory, the processor: generates geometry information indicating nodes constituting an octree structure; generates first control information indicating whether a first face of a first node included in the nodes includes a first face vertex provided on the first face except for first edges of the first face; and generates a bitstream including the geometry information and the first control information. Each of the nodes is a unit for containing three-dimensional points. The first node includes a first centroid vertex and first edge vertices that are used in a TriSoup scheme. The first face vertex, the first centroid vertex, and the first edge vertices define a triangle on which three-dimensional points in the first node are disposed. The first control information is provided for a face of the first node that satisfies a predetermined condition.

It is to be noted that these general or specific aspects may be implemented as a system, a method, an integrated circuit, a computer program, or a computer-readable recording medium such as a CD-ROM, or may be implemented as any combination of a system, a method, an integrated circuit, a computer program, and a recording medium.

Hereinafter, embodiments will be specifically described with reference to the drawings. It is to be noted that each of the following embodiments indicate a specific example of the present disclosure. The numerical values, shapes, materials, constituent elements, the arrangement and connection of the constituent elements, steps, the processing order of the steps, etc., indicated in the following embodiments are mere examples, and thus are not intended to limit the present disclosure. Among the constituent elements described in the following embodiments, constituent elements not recited in any one of the independent claims will be described as optional constituent elements.

### [Embodiment 1]

Hereinafter, an encoding device (three-dimensional data encoding device) and a decoding device (three-dimensional data decoding device) according to the present embodiment will be described. The encoding device encodes three-dimensional data to thereby generate a bitstream. The decoding device decodes the bitstream to thereby generate three-dimensional data.

Three-dimensional data is, for example, three-dimensional point cloud data (also called point cloud data). A point cloud, which is a set of three-dimensional points, represents the three-dimensional shape of an object. The point cloud data includes position information and attribute information on the three-dimensional points. The position information indicates the three-dimensional position of each three-dimensional point. It should be noted that position information may also be called geometry information. For example, the position information is represented using an orthogonal coordinate system or a polar coordinate system.

Attribute information indicates color information, reflectance, infrared information, a normal vector, or time-of-day information, for example. One three-dimensional point may have a single item of attribute information or have a plurality of kinds of attribute information.

It should be noted that although mainly the encoding and decoding of position information will be described below, the encoding device may perform encoding and decoding of attribute information.

### [TriSoup scheme]

The encoding device according to the present embodiment encodes position information by using a Triangle-Soup (TriSoup) scheme.

The TriSoup scheme is an irreversible compression scheme for encoding position information on point cloud data. In the TriSoup scheme, an original point cloud being processed is replaced by a set of triangles, and the point cloud is approximated on the planes of the triangles. Specifically, the original point cloud is replaced by vertex information on vertexes (hereinafter also referred to as vertices) within each node, and the vertexes are connected with each other to form a group of triangles. Furthermore, the vertex information for generating the triangles is stored in a bitstream, which is sent to the decoding device.

Now, encoding processing using the TriSoup scheme will be described. FIG. 1 is a diagram illustrating an example of an original point cloud. As shown in FIG. 1, point cloud 102 of an object is in target space 101 and includes points 103.

First, the encoding device divides the original point cloud into an octree up to a predetermined depth. In octree division, a target space is divided into eight nodes (subspaces), and 8-bit information (an occupancy code) indicating whether each node includes a point cloud is generated. A node that includes a point cloud is further divided into eight nodes, and 8-bit information indicating whether these eight nodes each include a point cloud is generated. This processing is repeated up to a predetermined layer.

Here, typical octree encoding divides nodes until the number of point clouds in each node reaches, for example, one or a threshold. In contrast, the TriSoup scheme performs octree division up to a layer along the way and not for layers lower than that layer. Such an octree up to a midway layer is called a trimmed octree.

FIG. 2 is a diagram illustrating an example of a trimmed octree. As shown in FIG. 2, point cloud 102 is divided into leaf-nodes 104 (lowest-layer nodes) of a trimmed octree.

The encoding device then performs the following processing for each leaf-node 104 of the trimmed octree. It should be noted that a leaf-node may hereinafter also be simply referred to as a node. The encoding device generates vertexes on edges of the node as representative points of the point cloud near the edges. These vertexes are called edge vertexes. For example, an edge vertex is generated on each of a plurality of edges (for example, four parallel edges).

FIG. 3 is a diagram illustrating an example of two-dimensional display of leaf-node 104, for example, the xy-plane viewed along the z-direction shown in FIG. 1. As shown in FIG. 3, edge vertexes 112 are generated on edges based on points near the edges, among points 111 within leaf-node 104.

It should be noted that the dotted lines in FIG. 3 along the perimeter of leaf-node 104 represent the edges. Also in this example, each edge vertex 112 is generated at a weighted average of the positions of points within the distance 1 from the corresponding edge (points within each range 113 in FIG. 3). It should be noted that the unit of distance may be, by way of example and not limitation, the resolution of the point cloud. Although the distance (the threshold) is 1 in this example, the distance may be a value other than 1 or may be variable.

The encoding device then generates a vertex inside the node as well, based on a point cloud located in the direction of the normal to the plane that includes edge vertexes. This vertex is called a centroid vertex.

FIGS. 4 and 5 are diagrams for describing a method for generating the centroid vertex. First, the encoding device selects, for example, four points as representative points from a group of edge vertexes. In the example shown in FIG. 4, edge vertexes v1 to v4 are selected. The encoding device then calculates approximate plane 121 passing through the four points. The encoding device then calculates normal n to approximate plane 121 and average coordinates M of the four points. The encoding device then generates centroid vertex C at weighted-average coordinates of one or more points near a half line extending along normal n from average coordinates M (e.g., points within range 122 shown in FIG. 5).

The encoding device then entropy-encodes vertex information, which is information on the edge vertexes and the centroid vertex, and stores the encoded vertex information in a geometry data unit (hereinafter referred to as a GDU) included in the bitstream. It should be noted that, in addition to the vertex information, the GDU includes information indicating the trimmed octree.

FIG. 6 is a diagram illustrating an example of the vertex information. The above processing transforms point cloud 102 into vertex information 123, as shown in FIG. 6.

Now, decoding processing for the bitstream generated as above will be described. First, the decoding device decodes the GDU from the bitstream to obtain the vertex information. The decoding device then connects the vertexes to generate a TriSoup surface, which is a group of triangles.

FIG. 7 is a diagram illustrating an example of the TriSoup surface. In the example shown in FIG. 7, four edge vertexes v1 to v4 and centroid vertex C are generated based on the vertex information. Furthermore, triangles 131 (a TriSoup surface) are generated, each having centroid vertex C and two edge vertexes as its vertexes. For example, a pair of two edge vertexes on a pair of two adjacent edges is selected to form triangle 131 having the selected pair of edge vertexes and the centroid vertex as its vertexes.

FIG. 8 is a diagram for describing point cloud reconstruction processing. The above processing is performed for each leaf-node to generate a three-dimensional model that represents the object with triangles 131, as shown in FIG. 8.

The decoding device then generates points 132 at regular intervals on the surface of triangles 131 to reconstruct the position information on point cloud 133.

### [Example of representation of ridge line of point cloud surface]

According to the TriSoup scheme, the shape of the ridge line (ridge) across the adjacent nodes cannot be reconstructed in some cases. In contrast, the encoding device generates the face vertex on the surface in contact with the neighboring node, and reconstructs the point cloud also on the surface of the triangle generated based on the centroid vertex, the face vertices, and the edge vertices.

For example, in a case where a bent portion of the point cloud distribution (point cloud surface) is distributed within the leaf node, the surface model made by connecting the vertices cannot reproduce the shape of the original point cloud in some cases because the corner of the point cloud surface and the edge do not intersect each other and no vertex is formed at the position of the corner.

FIG. 9 is a diagram illustrating an example of a point cloud in a case where a point cloud is distributed across node 1 and node 2, and a ridge line is formed. As shown in FIG. 9, based on the point cloud distribution close to edges, edge vertices 112 are generated.

FIG. 10 is a diagram illustrating a centroid vertex generation example in this case. As shown in FIG. 10, each centroid vertex 151 is formed in the normal direction of an approximate plane of the edge vertex group.

FIG. 11 is a diagram illustrating a generation example of triangles 131 (TriSoup surface) in this case. As shown in FIG. 11, each triangle 131 is generated by connecting a plurality of vertices (plurality of edge vertices and a centroid vertex). In this case, as illustrated in FIG. 11, the point cloud in the vicinity of the node boundary cannot be reproduced.

This is because the centroid vertex successfully samples the original point cloud surface but the current scheme can create no vertex between two centroid vertices of two neighboring nodes. For example, in a case where a ridge line is continuously distributed in the node along the direction of any of x, y, and z axes, no vertex corresponding to the ridge line is formed because the ridge line is not across any edge. Accordingly, this problem occurs.

In the present embodiment, the encoding device predicts the ridge line of the point cloud surface. Upon determination that two neighboring nodes have the same ridge line, this device transfers, to the decoding device, information for connecting two centroid vertices of the two neighboring nodes by a line segment. This information is, for example, 1-bit information assigned to each surface between nodes.

The decoding device connects the centroid vertices using this information, and generates a new vertex (face vertex) at an intersection between the obtained line segment and a shared surface between the nodes. When generating triangle 131, the decoding device can reproduce the ridge line using the new vertex.

Since the coordinate position of the face vertex is not quantized, a problem of positional deviation due to quantization is not present.

FIG. 12 is a diagram illustrating a face vertex generation example. As shown in FIG. 12, the decoding device can reproduce the ridge line by generating face vertex 161 and generating triangle 131 using face vertex 161.

According to the method described above, the point cloud surface in the vicinity of the node boundary can be reproduced. Accordingly, a decoded point cloud more similar to the original point cloud can be obtained. It should be noted that in the above description, the point cloud surface is only used to describe the problem concerning the ridge line. The ridge line is not required to be actually obtained.

### [Overview of generation, transfer, and reconstruction of face vertex]

First, evaluation and reconstruction of connectivity of centroid vertices are described. The encoding device generates the line segment connecting the centroid vertex of the current node and the centroid vertex of the neighboring node, with respect to each node, and determines the connectivity between the centroid vertices based on the weight for the point cloud adjacent to the intersection between the line segment and the shared surface between the nodes.

The encoding device sets a boolean (bool) value (for example, the face vertex information described above) indicating whether to connect two centroid vertices with respect to this surface and generate the face vertex.

The boolean value of each surface is transferred from the encoding device to the decoding device. For the surface having a boolean value = true, the decoding device generates a face vertex at the position at which the line segment connecting the centroid vertices of the nodes on both the sides of this surface intersects this surface.

FIG. 13 is a diagram illustrating an example of surfaces about which the connectivity evaluation and reconstruction of the centroid vertex among the six surfaces of the node. For example, as shown in FIG. 13, for three surfaces on a side of each axis with a larger coordinate among the six surfaces of the node, the encoding device and the decoding device perform connectivity evaluation and reconstruction of the centroid vertex on both the sides of each of the surfaces.

Next, an overview of reduction of the data amount of the bitstream, and limitation on face information is described. To reduce the transfer data amount, the encoding device sets a condition for face vertex information (set of boolean values) using information known to the decoding device, thus reducing the data amount of face vertex information to be transmitted. It should be noted that the details of the process are described later.

Next, ordering of an inner-node vertex group is described. To generate the TriSoup surface, two edge vertices, or edge vertices and the face vertex are required to be appropriately selected. For example, if edge vertices close to the face vertex are not selected, and far edge vertices are selected, the surface approximating the point cloud is not formed. Furthermore, a face to be approximated is not generated. Accordingly, for example, to provide the surface without opening holes with no gap in the node, ordering using the rotation order for the edge vertices and face vertex group with reference to the centroid vertex is required. It should be noted that the details are described later.

### [Processing flow]

FIG. 14 is a flowchart of encoding processing by the encoding device. First, the encoding device applies octree division to the point cloud and generates the trimmed octree, and generates a plurality of leaf nodes (leaf node group) of the trimmed octree. Furthermore, the encoding device applies arithmetic encoding (entropy encoding) to the octree information indicating the trimmed octree, and stores the encoded octree information in the bitstream (S201).

Next, the encoding device generates the edge vertices and the centroid vertex from the point cloud distribution in the node, for each of the nodes (leaf nodes), applies arithmetic encoding (entropy encoding) to vertex information indicating each item of position information, and stores the encoded vertex information in the bitstream (S202).

Next, only for the surface satisfying a geometry condition among the surfaces of each node, the encoding device generates a face vertex at the position at which the line segment connecting the centroid vertex of the current node and the centroid vertex of the neighboring node intersects the surface (S203).

Next, the encoding device encodes face vertex information on the surface satisfying the geometry condition, and stores the encoded face vertex information in the bitstream (S204). Here, the face vertex information is information indicating whether to connect the centroid on both the sides of the surface to each other and generate the face vertex.

Next, the encoding device performs the processes of following steps S205 to S208 (loop processing) for each of the leaf nodes of the trimmed octree. First, the encoding device applies counterclockwise ordering to the edge vertices and the face vertices in the node (S205). Next, the encoding device connects the vertex group (the edge vertices, centroid vertex, and face vertices) in the node, and generates a triangle (TriSoup surface) (S206).

Next, the encoding device generates a plurality of points on the surface of the triangle (S207). Next, the encoding device makes the decoded points in the node unique with their coordinate values, and adds these points to the decoded point cloud (S208). Here, making unique means exclusion of points with redundant coordinate values. Thus, the loop processing for the current node is finished.

FIG. 15 is a flowchart of decoding processing by the decoding device. First, the decoding device applies arithmetic decoding (entropy decoding) to the bitstream and obtains the octree information, generates the trimmed octree using the octree information, and generates a plurality of leaf nodes (leaf node group) (S211).

Next, the decoding device applies arithmetic decoding to the bitstream and obtains the vertex information indicating the positions of the edge vertices and the centroid vertex (S212).

Next, only for the surface satisfying the geometry condition among the surfaces of each leaf node, the decoding device applies arithmetic decoding to the face vertex information (S213). Next, the decoding device generates the face vertex, based on the face vertex information (S214).

Next, the decoding device performs the processes of following steps S215 to S218 (loop processing) for each of the leaf nodes of the trimmed octree. First, the decoding device applies counterclockwise ordering to the edge vertices and the face vertices in the node (S215). Next, the decoding device connects the vertex group (the edge vertices, centroid vertex, and face vertices) in the node, and generates a triangle (TriSoup surface) (S216).

Next, the decoding device generates a plurality of points on the surface of the triangle (S217). Next, the decoding device makes the decoded points in the node unique with their coordinate values, and adds these points to the decoded point cloud (S218). Here, making unique means exclusion of points with redundant coordinate values. Thus, the loop processing for the current node is finished.

FIG. 16 is a flowchart of transfer processing of face vertex information (details of steps S203 and S204 illustrated in FIG. 14).

The encoding device performs the processes of following steps S221 to S226 (loop processing) for the surfaces of each node. First, the encoding device determines whether the current surface as the processing target satisfies a first condition for face vertex generation (S221). It should be noted that the first condition is a limiting condition based on geometry information for reducing the data amount of an after-mentioned bitstream, and described in detail later. Furthermore, by providing this condition, surfaces where no face vertex can be generated can be excluded based on the positional relationship between the node, edge vertices, and centroid vertex. Accordingly, the transfer information amount can be reduced.

If the first condition is satisfied (Yes in S221), the encoding device determines whether the current surface satisfies a second condition for generating the face vertex (S222). It should be noted that the second condition is evaluation of the weight for the point cloud adjacent to the position of the face vertex candidate, in evaluation of the connectivity of the centroid vertex described later. It should be noted that the details are described later. By providing the condition, the face vertex based on the distribution of the ridge line shape of the point cloud on the surface can be generated.

If the second condition is satisfied (Yes in S222), the encoding device sets the face vertex information on the current surface to "true (with the vertex)", and accumulates the face vertex information that is to be transferred (S223). On the other hand, if the second condition is not satisfied (No in S222), the face vertex information on the current surface is set to "false (without the vertex)", and accumulates the face vertex information that is to be transferred (S224).

If the first condition is not satisfied (No in S221), the encoding device does not generate the face vertex information on the current surface, regards it as "false", and does not accumulate the face vertex information that is to be transferred (S225).

Next, the encoding device generates a face vertex on the current surface based on the face vertex information (true/false) (S226). That is, the encoding device generates the face vertex on the current surface if the face vertex information is "true", and does not generate the face vertex on the current surface if the face vertex information is "false" (or regarded as "false"). Thus, the loop processing for the current surface is finished.

Next, the encoding device encodes the accumulated face vertex information items, and stores the encoded face vertex information items in the bitstream (S227).

FIG. 17 is a flowchart of face vertex information decoding processing (details of steps S213 and S214 illustrated in FIG. 15).

The decoding device performs the processes of following steps S231 to S234 (loop processing) for the surfaces of each node. First, the decoding device determines whether the current surface satisfies a first condition for face vertex generation (S231). It should be noted that the first condition is the same as the first condition in step S221 illustrated in FIG. 16.

If the first condition is satisfied (Yes in S231), the decoding device decodes the bitstream and obtains face vertex information indicating whether to generate the face vertex on the current surface (S232). Accordingly, it is determined whether to generate the face vertex on the current surface ("true" or "false").

Furthermore, if the first condition is not satisfied (No in S231), the decoding device does not decode the bitstream and obtain the face vertex information on the current surface, and sets the face vertex information on the current surface to "false" (S233).

Next, the decoding device generates the face vertex on the current surface based on the face vertex information (true/false) (S234). That is, the decoding device generates the face vertex on the current surface if the face vertex information is "true", and does not generate the face vertex on the current surface if the face vertex information is "false". Thus, the loop processing for the current surface is finished.

By defining the first condition (the condition preliminarily defined in the encoding device and the decoding device and unchangeable) before the second condition of whether to generate the face vertex as described above, flag information can be prevented from being transferred.

By combining the predefined first condition (unchangeable condition) with the second condition that can be flexibly set in the encoding device and notified using the flag (changeable condition), both data amount reduction and setting flexibility can be achieved.

### [Connectivity evaluation and reconstruction of centroid vertex]

The encoding device evaluates the weight for the point cloud on the line segment connecting the centroid vertices, and if the weight for the point cloud adjacent to the face vertex candidate is equal to or larger than a threshold, the encoding device sets the candidate as the face vertex. Here, the candidate is the intersection between the line segment connecting the centroid vertices and the surface. Furthermore, the weight for the point cloud adjacent to the face vertex candidate is the number of points included in a region with a predetermined distance from the face vertex candidate or the density.

FIG. 18 is a diagram illustrating an example of the face vertex candidate. In this example, the intersection between line segment L1 connecting centroid vertex C1 of node 1 and centroid vertex C2 of node 2, and shared surface F1, is determined as the face vertex candidate.

The encoding device assigns the bitstream one-bit information (centroid vertex information) that means "whether to connect the centroid vertices on both the sides of the surface in the node and generate the vertex on the surface" about the surface, as transfer information to the decoding device. Furthermore, for each of all the surfaces, the encoding device generates this one-bit information item, and stores the generated one-bit information items in the bitstream.

The decoding device obtains the face vertex information besides the node position information, and position information on the edge vertices and the centroid vertex. For each surface, the decoding device generates the face vertex, based on the corresponding face vertex information.

It should be noted that the encoding device herein sets the intersection between the line segment of the centroid vertices and the surface at the position of the face vertex, but may generate the face vertex at a position deviating from the position of the intersection, based on the distribution of the point cloud, for example. In this case, the encoding device stores, in the bitstream, the offset amount between the positions of the intersection and the face vertex on the surface besides the one-bit information. The offset amount is represented as, for example, a two-dimensional value. That is, information indicating the position of the face vertex may be stored in the bitstream. It should be noted that the information indicating the position of the face vertex is not limited to the offset amount, and may be coordinate information, or the coordinate difference from another vertex (the edge vertices or the centroid vertex) or a vector.

According to this scheme, the position of the face vertex becomes one in which the shape of the ridge line of the point cloud is more appropriately reflected while maintaining the connectivity of the point cloud surface between the nodes. Thus, the reconstructed point cloud having a high quality can be obtained.

### [Reduction of bitstream data amount]

The encoding device sets a condition for every surface using information known to the decoding device, and reduces the number of face vertex information items to be transferred. Specifically, since the position information items on the edge vertices and the centroid vertices have already been known, the decoding device uses them and excludes pairs of centroid vertices that cannot be connected to each other, based on the geometry relationship.

For example, the encoding device limits generation of the face vertex information by AND (logical product) of following five conditions (a) to (e). It should be noted that the encoding device may use only some of these conditions, or further combine another condition.

(a) The current node includes centroid vertex (C0). (b) A node is present adjacent to the current node (presence of neighboring node). It should be noted that presence of a neighboring node in any of x, y, and z axes may be employed. (c) The neighboring node includes centroid vertex (C1). This condition is set because if the number of edge vertices is small, no centroid vertex is sometimes generated. (d) The number of edge vertices on the shared surface that the nodes share is two or three. This condition assumes a case where a point cloud is present in a manner of a ridge line.

(e) The surface in a case where the face vertex is generated swells more than the original surface. Here, the surface is a surface made up of a plurality of triangles (TriSoup surfaces). Specifically, if three vectors that are (1) vector Cvec0 from center of balance G0 of the edge vertex group in the current node to centroid vertex C0, (2) vector Cvec1 from center of balance G1 of the edge vertex group in the neighboring node to centroid vertex C1, and (3) vector NF from face vertex candidate F to N that is the foot of the perpendicular on the line segment formed by two edge vertices on the shared surface are not reversed (both the inner product of vector Cvec0 and vector NF, and the inner product of vector Cvec1 and vector NF are positive), the face vertex information on the current surface is set as a transfer target.

FIG. 19 is a diagram illustrating an example arrangement of the vertex group where the face vertex is generated. FIG. 20 illustrates vector NF. The example illustrated in FIG. 19 is an example where two edge vertices are present on the shared surface, and the face vertex is generated, and the surface swells accordingly, and the face vertex information is transferred.

Vector u illustrated in FIG. 20 is a unit vector of vectors E2 and E3. x = E2F·u, and NF = E2F - xu hold. If Cvec0·NF > 0 and Cvec1·NF > 0, the surface swells.

FIG. 21 is a diagram illustrating an example arrangement of the vertex group where two edge vertices are present on the shared surface, and the surface does not swell. In this case, the face vertex information is not transferred.

FIG. 22 is a diagram illustrating an example arrangement of the vertex group where two edge vertices are present on the shared surface, and the surface does not swell. In this case, the face vertex information is not transferred.

FIG. 23 is a diagram illustrating an example arrangement of the vertex group where three edge vertices are present on the shared surface, and the surface swells. In this case, the face vertex information is transferred. In the example illustrated in FIG. 23, among edge vertices E2, E3, and E4, a pair of edge vertices (E2 and E3) where the midpoint of the line segment formed by adjacent two and the face vertex candidate are closest are selected, and point N is determined.

It should be noted that the determination as described above is not necessarily performed. For example, in the case illustrated in FIG. 22, it may be determined that the point cloud surface swells.

According to another condition, if the certain constant number of face vertices are continuously generated in the precedent reconstructed node continuous to the neighboring node in the reconstruction process, the encoding device may determine that the face vertex is generated also in the current node. As determination that the point cloud surface swells, instead of the sign of the inner product of the vectors described above, the encoding device may actually calculate the volume of the point cloud surface, and determine that the surface swells if the volume increases.

It should be noted that the determination corresponds to the first condition in step S221 illustrated in FIG. 16 and in step S231 illustrated in FIG. 17. Furthermore, here, the example where the encoding device performs determination is described. However, similar determination is performed also in the decoding device.

### [Ordering of vertex group in node]

A plurality of triangles (TriSoup surfaces) are generated in the node for reconstructing the point cloud. In this case, not to fail to develop triangles, the vertex group is required to be sequentially selected from the end. Specifically, the decoding device performs ordering for the edge vertices and the face vertices according to the rotation order centered at the centroid vertex. The decoding device sequentially selects every two points based on the set order, and generates a triangle with three points that are the selected two points and the centroid vertex. Accordingly, triangles can be generated in the node without any gap.

However, the existing method uses the assumption that the ordering target is only edge vertices on the node frames, projects the vertex group from the main axis (any of x, y, and z axes), and successfully achieves ordering by simple sorting. In the present embodiment, the face vertex is generated on the surface of the node. Accordingly, the ordering target is not limited to the node frames (edges), and simple sorting is not achieved.

FIGS. 24 to 28 are diagrams for describing this problem. FIG. 24 is a diagram illustrating an example of the edge vertices and the centroid vertex. FIG. 25 is a diagram illustrating an example of correctly generated triangles. FIG. 26 is a diagram illustrating an example of incorrectly generated triangles.

For example, as shown in the example illustrated in FIG. 24, the edge vertices are ordered. For example, the decoding device projects the edge vertices in the x-axis direction, and performs ordering. Next, as shown in FIG. 25, the decoding device generates each triangle with a combination of the centroid vertex and two edge vertices adjacent to each other. On the other hand, as illustrated in FIG. 26, failed ordering of the edge vertices opens holes in the node.

FIG. 27 is a diagram illustrating an example of the edge vertices, the centroid vertex, and the face vertices. FIG. 28 is a diagram illustrating an example of triangle generation when simple sorting is applied to this case.

For example, in a case of applying simple sorting to the vertex group including the face vertices, ordering illustrated in FIG. 27 is performed. It should be noted that the numerical values in parentheses indicate the order set by the ordering. In this case, holes are formed as illustrated in FIG. 28. In this case, the order of face vertex F2 should be set to (5) but is actually set to (7), which causes formation of the holes.

In contrast, instead of simple sorting, the arctangent (arctan) of each vertex with the viewpoint facing an annular distribution formed by the edge vertices and the face vertices is calculated. Furthermore, to make the viewpoint face the annular distribution, the vertex group is multiplied by a rotation matrix.

FIGS. 29 to 32 are diagrams for describing this process. (A) illustrated in FIG. 29 indicates a normal unit vector of the edge vertex group in the node. (B) indicates a unit vector in the z-axis direction. (C) indicates a rotation axis obtained by an outer product of (A) and (B).

By adjusting the origin of the vertex coordinates to the centroid vertex, and then multiplying the edge vertex and face vertex group by a matrix that rotationally aligns (A) with (B), the annular arrangement of the vertex group faces the z-axis.

The amount of rotation (cosθ, sinθ) is obtained by the inner product of (A) and (B). The rotation axis (C) is obtained from the outer product of (A) and (B).

FIG. 30 is a diagram illustrating an example of each vertex in a state of facing the z-axis after the process described above. The decoding device calculates the arctangent (arctan) from the x and y coordinates of each vertex in the state of facing the z-axis, sorts each vertex, and performs ordering. Thus, the ordering illustrated in FIG. 31 is performed. The decoding device selects every two points from the vertex group including the edge vertices and face vertices according to the order centered at the centroid vertex, and generates each triangle using the selected two points and the centroid vertex. Thus, a plurality of triangles are generated as illustrated in FIG. 32.

It should be noted that in the example described above, the annular distribution faces the viewpoint in the z-axis direction, but the viewpoint may be set in the x-axis direction or the y-axis direction, or another direction.

Another possible method of ordering is as follows. FIGS. 33 and 34 are diagrams for describing the processing in this method.

In the processing of limiting the face vertex information as described with reference to diagrams such as FIG. 19, the simple sort achieves the counterclockwise sort of the edge vertices (E0 to E3) in the current node. For face vertex F to be inserted into this sort order, the nearest edge vertices would be vertices E1 and E2, as determined by the distance between face vertex F and each edge vertex. Thus, face vertex F is determined to be inserted after vertex E1 and before vertex E2. Repeating this for each face vertex enables rotation-direction sort of the edge vertices and the face vertices, as illustrated in FIG. 33.

The decoding device sequentially selects two points at a time from the vertex group including the edge vertices and the face vertices, in rotation around the centroid vertex, and generates a triangle with each selected point pair and the centroid vertex. This results in multiple triangles generated as illustrated in FIG. 34.

### [Syntax]

In relation to reduction of the data amount of the bitstream, information to be transferred from the encoding device to the decoding device for face vertex reconstruction is one-bit information (face vertex information) indicating whether to generate a face vertex on each face to which a limitation is provided based on the geometry.

FIG. 35 is a diagram illustrating a syntax example of GDU (geometry_data_unit_data) included in the bitstream. GDU includes octree information, and geometry_trisoup_data. The geometry_trisoup_data includes the number of edges, edge vertex information, the number of edge vertices, edge vertex position information, the number of transfer surfaces, and face vertex information.

Octree information is information indicating the configuration of a trimmed octree, and information indicating the positions of leaf-nodes included in the trimmed octree.

The number of edges indicates the number of unique edges. It should be noted that a unique edge is any edge except for edges having overlapping coordinates. Edge vertex information is provided for each edge, and edge vertex information [i] indicates whether an edge vertex is located on i-th edge. For example, a value of 0 indicates the absence of an edge vertex, and a value of 1 indicates the presence of an edge vertex.

The number of edge vertices indicates the number of vertices on an edge, that is, the number of edge vertices. Edge vertex position information is provided for each edge vertex, and edge vertex position information [i] indicates the position of an i-th edge vertex.

The number of transfer surfaces indicates the total number of information items (face vertex information) on the surface to be transferred. The face vertex information is provided for each surface. The face vertex information [i] is one-bit information indicating whether to generate a face vertex on the i-th surface (whether a face vertex is present). For example, a value of 0 indicates that no face vertex is generated, and a value of 1 indicates that a face vertex is generated.

Furthermore, the number of transfer surfaces and the face vertex information are included in the bitstream if the face vertex function is valid, and are not included in the bitstream if the face vertex function is invalid. The face vertex function is a process of generating the face vertex described above.

For example, a flag indicating whether the face vertex function is valid or invalid is provided, and based on the flag, it is determined whether the face vertex function is valid or invalid. The flag may be stored in GPS or GDU header, for example.

Furthermore, the validity of the face vertex function may be set for each node. In this case, a plurality of flags corresponding to respective nodes may be stored in the GDU header.

FIG. 36 is a diagram illustrating a variation of the syntax of GDU. The syntax illustrated in FIG. 36 is different from the syntax illustrated in FIG. 35 in that GDU includes face vertex group information instead of the number of transfer surfaces and the face vertex information.

The face vertex group information indicates whether to generate a face vertex on each of surfaces. That is, the face vertex group information is information in which the face vertex information items illustrated in FIG. 35 are combined. Furthermore, the face vertex group information is included in the bitstream if the face vertex function is valid, and is not included in the bitstream if the face vertex function is invalid.

According to the syntax illustrated in FIG. 36, GDU does not include the number of transfer surfaces. Here, node information for applying a limitation based on the geometry to each surface, position information on the edge vertices, and position information on the centroid vertex have already been known to the decoding device. Consequently, the decoding device can calculate the number of information items on the surfaces to be actually transferred (the number of transfer surfaces), by applying the limitation based on the geometry to every surface acquired from the neighboring relationship of the node.

FIG. 37 is a diagram illustrating a variation of the syntax of GDU. The syntax illustrated in FIG. 37 is a syntax example in a case of generating the face vertex at a position deviating from the intersection between the line segment connecting the two centroid vertices and the surface, as described above. In comparison with the syntax illustrated in FIG. 35, in the syntax illustrated in FIG. 37 GDU further includes offset amount (x) and offset amount (y).

Offset amount (x) and offset amount (y) are provided for each face vertex. Offset amount (x) [i] indicates the offset amount of the i-th face vertex in the x-axis direction between the intersection and this face vertex. Offset amount (y) [i] indicates the offset amount of the i-th face vertex in the y-axis direction between the intersection and this face vertex. That is, offset amount (x) and offset amount (y) indicate the two-dimensional offset amount from the intersection to the face vertex.

For example, the encoding device may quantify the two-dimensional offset amount, and then store the quantized amount in the bitstream. In this case, the bitstream includes a quantization parameter used for quantization. The decoding device inversely quantizes the quantized offset amount included in the bitstream using the quantization parameter, and reconstructs the original offset amount.

### [Other]

In the flowchart illustrated in FIG. 17, the decoding device generates the face vertex if the received face vertex information is true, but may generate the face vertex irrespective of the face vertex information. For example, the encoding device need not store the face vertex information in the bitstream, the decoding device may generate the face vertex if the first condition is satisfied, and generate no face vertex if the first condition is not satisfied.

Furthermore, in the flowchart illustrated in FIG. 16, the encoding device determines the value (true or false) of the face vertex information using the first condition and the second condition, but may determine the value of the face vertex information using only one of the first condition and the second condition.

According to the ordering of the vertex group in the node, the rotation axis passing through the centroid vertex is obtained from the outer product of the normal vector of the plane made up of the edge vertex group and any coordinate axis. However, the method of obtaining the rotation axis for ordering the vertex group (edge vertices and face vertices) is not limited thereto. For example, the vertex group may be projected in the direction of any axis passing through the centroid vertex, and the axis direction may be determined such that the minimum value of the distance between the projected point and the axis can be larger than a predetermined value. Alternatively, the axis direction may be determined such that the sum of squares of the distances can be larger than a predetermined value.

In reduction of the data amount of the bitstream, the boolean value (one-bit face vertex information) is transferred. Alternatively, information in another format may be transferred. For example, the face vertex information may indicate three or more values. For example, a value of 0 may indicate "no face vertex is generated", a value of 1 may indicate "a face vertex is generated", and a value of 2 may indicate "a face vertex is generated depending on the capacity of the decoding device". Alternatively, in the case of using a boolean value, if the boolean value is true, the decoding device may determine whether to generate a face vertex depending on the capacity of the decoding device.

### [Embodiment 2]

In this embodiment, a method of omitting the transmission of the face vertex information will be described. FIG. 38 is a diagram illustrating a configuration example of a bitstream according to this embodiment. As shown in FIG. 38, the bitstream includes an SPS, a GPS, APSs, GDUs (Geom), and ADUs (Attr).

The SPS (Sequence Parameter Set) is metadata (a parameter set) common to multiple frames. The APSs (Attribute Parameter Sets) are metadata (parameter sets) related to the encoding of attribute information. The GPS (Geometry Parameter Set) is metadata (a parameter set) related to the encoding of geometry information. For example, the APSs and the GPS are metadata common to multiple frames.

The GDUs are data units of encoded data of geometry information (geometry data units). The ADUs are data units of encoded data of attribute information (attribute data units).

Note that, in FIG. 38, each point has two types of attribute information (Attr (0) and Attr (1)). A GDU and an ADU are generated for each processing unit that includes multiple three-dimensional points. A processing unit is, for example, a frame or a slice.

FIG. 38 also illustrates GDU configuration examples in a comparative example (which does not adopt the method of this embodiment) and in this embodiment. In the comparative example, a GDU includes a GDU header, octree data, edge vertex data, centroid vertex data, face vertex data, and a GDU footer. The GDU header is the header (control information) of the GDU. The octree data is information indicating the octree structure, including, for example, the octree information illustrated in FIG. 35. The edge vertex data is information on edge vertices, including, for example, the edge count, the edge vertex information, the edge vertex count, and the edge vertex position information illustrated in FIG. 35.

The centroid vertex data is information on centroid vertices, including, for example, information indicating the positions of the centroid vertices. The face vertex data is information on face vertices, including, for example, the transmitted-face count and the face vertex information illustrated in FIG. 35. The GDU footer is the footer (control information) of the GDU.

As shown in FIG. 38, the bitstream in this embodiment includes a face-vertex non-transmission flag, for example in the GDU header. The face-vertex non-transmission flag is, for example, a 1-bit flag that indicates whether the bitstream includes information on face vertices (face vertex data).

The encoding device determines whether each eligible face has a face vertex. If this processing shows that all the eligible faces in the processing unit (e.g., a slice) corresponding to the GDU have face vertices, the encoding device stores, in the GDU header, the face-vertex non-transmission flag indicating the value 1. That is, the face-vertex non-transmission flag indicates whether all the eligible faces have face vertices. If all the eligible faces have face vertices, the bitstream does not include the face vertex data. Thus, the transmission of the face vertex data is omitted.

Note that an eligible face is a face determined to satisfy the first condition at step S221 shown in FIG. 16 or step S231 shown in FIG. 17.

If the face-vertex non-transmission flag = 0, the bitstream including the face vertex data is transmitted.

In the decoding device, if the face-vertex non-transmission flag = 1 in the processing of each processing unit (e.g., slice), the decoding device determines that all the eligible faces have face vertices. The decoding device then skips reading and arithmetically decoding face vertex data.

If the face-vertex non-transmission flag = 0, the decoding device reads and arithmetically decodes face vertex data to obtain information on the face vertex on each eligible face.

The above processing can reduce the data volume of the transmitted data without compromising the restored shape of the TriSoup triangles. In addition, the ability to switch the processing mode according to the face-vertex non-transmission flag can reduce the time required for the decoding process.

Note that the face-vertex non-transmission flag may be stored at locations other than the GDU header. For example, the face-vertex non-transmission flag may be stored at anywhere after the GDU header, e.g., at the location immediately after the centroid vertex data and immediately before the face vertex data.

Alternatively, the face-vertex non-transmission flag may be stored in a sequence header (e.g., the SPS or the GPS). In that case, the face-vertex non-transmission flag stored in the sequence header may be used for multiple processing units (GDUs).

Now, an encoding process sequence in this embodiment will be described. The encoding process according to this embodiment differs from the encoding process shown in FIG. 14 in that steps S203 and S204 are replaced with steps S203A and S204A.

FIG. 39 is a flowchart of these steps, i.e., the process of transmitting the face vertex information (S203A and S204A). The process shown in FIG. 39 differs from the process at steps S203 and S204 shown in FIG. 16 in that step S227 is replaced with steps S251 to S254. The following mainly describes the differences from the process shown in FIG. 16.

After completing the loop processing for each face, the encoding device determines whether all the faces satisfying the first condition satisfy the second condition (S251). If at least one of the faces satisfying the first condition does not satisfy the second condition (No at S251), the encoding device sets the face-vertex non-transmission flag to the value 0 and stores the face-vertex non-transmission flag with the value 0 in the bitstream (S252). The encoding device then encodes the accumulated multiple face vertex information items and stores the encoded face vertex information in the bitstream (S254).

If all the faces satisfying the first condition satisfy the second condition (Yes at S251), the encoding device sets the face-vertex non-transmission flag to the value 1 and stores the face-vertex non-transmission flag with the value 1 in the bitstream (S253). In this case, the encoding device does not encode the accumulated multiple face vertex information items and therefore does not store encoded face vertex information in the bitstream.

Note that, if all the faces satisfying the first condition satisfy the second condition (Yes at S251), the encoding device may, for example according to other conditions, set the face-vertex non-transmission flag to the value 0 and store the face vertex information in the bitstream.

Now, a decoding process sequence in this embodiment will be described. The decoding process according to this embodiment differs from the decoding process shown in FIG. 15 in that steps S213 and S214 are replaced with steps S213A and S214A.

FIG. 40 is a flowchart of these steps, i.e., the process of decoding the face vertex information (S213A and S214A). The process shown in FIG. 40 differs from the process at steps S213 and S214 shown in FIG. 17 in that steps S261 and S262 are added. The following mainly describes the differences from the process shown in FIG. 17.

If the first condition is satisfied (Yes at S231), the decoding device obtains (decodes) the face-vertex non-transmission flag stored in the bitstream and determines whether the face-vertex non-transmission flag = 1 (S261). If the face-vertex non-transmission flag = 0 (No at S261), the decoding device decodes, from the bitstream, the face vertex information indicating whether a face vertex is to be generated on the current face (S232). Thus, whether to generate a face vertex on the current face or not ("true" or "false") is determined.

If the face-vertex non-transmission flag is = 1 (Yes at S261), the decoding device does not decode the face vertex information for the current face from the bitstream and sets the face vertex information for the current face to "true" (S262).

The decoding device then generates a face vertex on the current face based on the face vertex information (true/false) (S234). That is, the decoding device generates a face vertex on the current face if the face vertex information is "true," and does not generate a face vertex on the current face if the face vertex information is "false."

Now, syntax examples of information stored in the bitstream according to this embodiment will be described. FIG. 41 is a diagram illustrating a syntax example of a GDU header (geometry_data_unit_header) and a GDU (geometry_data_unit_data) in the bitstream. The syntax shown in FIG. 41 differs from the syntax shown in FIG. 35 in that the GDU header includes a face-vertex enabled flag and a face-vertex non-transmission flag.

The face-vertex enabled flag indicates whether the face vertex function is enabled or disabled. The face vertex function refers to the above-described processing of generating face vertices. For example, if the face-vertex enabled flag has the value 1, the face vertex function is enabled (face vertices are generated), whereas if the face-vertex enabled flag has the value 0, the face vertex function is disabled (no face vertices are generated).

The face-vertex non-transmission flag is, for example, included in the GDU header if the face-vertex enabled flag = 1 (if the face vertex function is enabled), and is not included in the GDU header if the face-vertex enabled flag = 0 (if the face vertex function is disabled).

The face-vertex non-transmission flag instructs to generate face vertices on all the geometrically limited faces (eligible faces). In other words, the face-vertex non-transmission flag indicates whether 1-bit information associated with each face that satisfies the first condition and specifying whether to generate a face vertex on that face (face vertex information) is transmitted.

If the face-vertex enabled flag = 1 and the face-vertex non-transmission flag = 0, the GDU includes information for generating face vertices (transmitted-face count and face vertex information[i]). Note that these information items have the same meaning as those in FIG. 35. Unless the face-vertex enabled flag = 1 and the face-vertex non-transmission flag = 0, the bitstream does not include the information for generating face vertices.

FIG. 42 is a diagram illustrating a variation of the syntax of the GDU header and the GDU. The syntax shown in FIG. 42 differs from the syntax shown in FIG. 41 in that the GDU includes face vertex group information instead of the transmitted-face count and the face vertex information. Further, the syntax shown in FIG. 42 differs from the syntax shown in FIG. 36 in that the GDU header includes the face-vertex enabled flag and the face-vertex non-transmission flag. Note that these flags have the same meaning as those in FIG. 41.

If the face-vertex enabled flag = 1 and the face-vertex non-transmission flag = 0, the GDU includes information for generating face vertices (face vertex group information). The face vertex group information has the same meaning as that in FIG. 36. Unless the face-vertex enabled flag = 1 and the face-vertex non-transmission flag = 0, the bitstream does not include the information for generating face vertices.

Note that the face-vertex enabled flag and the face-vertex non-transmission flag may be stored in the GDU header as shown in FIGS 41 and 42, or may be stored at other locations in the bitstream. For example, these flags may be stored in a sequence header (e.g., the SPS or the GPS). Alternatively, these flags may be at anywhere after the GDU header and before the face vertex information. The face-vertex enabled flag and the face-vertex non-transmission flag may be stored at different locations.

FIG. 43 is a diagram illustrating a variation of the syntax of the GDU header and the GDU. For example, the syntax shown in FIG. 43 differs from the syntax shown in FIG. 41 in the location of the face-vertex non-transmission flag. As shown in FIG. 43, the face-vertex non-transmission flag in an example may be located immediately before the information for generating face vertices (transmitted-face count and face vertex information[i]) in the GDU.

### [Summary]

As stated above, the decoding device (the three-dimensional data decoding device) according to the embodiment performs the process shown in FIG. 44. The decoding device: receives a bitstream including geometry information (e.g., octree information) and first control information (S301), the geometry information indicating nodes constituting an octree structure, the first control information indicating whether a first face of a first node included in the nodes includes a first face vertex provided on the first face except for first edges of the first face; and generates or does not generate the first face vertex on the first face according to the first control information (S302). Each of the nodes is a unit for containing three-dimensional points. The first node includes a first centroid vertex and first edge vertices that are used in a TriSoup scheme. The first face vertex, the first centroid vertex, and the first edge vertices define a triangle (e.g., a TriSoup triangle) on which three-dimensional points in the first node are disposed. The first control information is provided for a face of the first node that satisfies a predetermined condition (e.g., a first condition). In other words, the bitstream includes the first control information for a face that satisfies the predetermined condition, and does not include the first control information for a face that does not satisfy the predetermined condition.

Thus, the first control information is provided for a face that satisfies a predetermined condition, reducing the data volume of the bitstream compared to the first control information provided for all the faces. This reduces processing load on the decoding device.

For example, the predetermined condition includes a first condition whether the face includes two or three edge vertices. Thus, if no face vertex is likely to be generated, the generation of the first control information is omitted. This reduces the data volume of the bitstream.

For example, the predetermined condition includes a second condition whether a first vector, a second vector, and a third vector point in a same direction. The first vector is a vector from a first center of the first edge vertices to the first centroid vertex. The second vector is a vector from a second center of second edge vertices of a second node to a second centroid vertex of the second node, the second node being adjacent to the first node with the face in contact with the second node. The third vector is a vector from a first line to a tentative face vertex, the first line connecting two edge vertices of the face, the tentative face vertex being disposed in a position at which a second line connecting the first centroid vertex and the second centroid vertex intersects the face. Thus, if no face vertex is likely to be generated, the generation of the first control information is omitted. This reduces the data volume of the bitstream.

For example, when an inner product of the first vector and the third vector is positive and an inner product of the second vector and the third vector is positive, the first vector, the second vector, and the third vector are determined to point in the same direction. Thus, the decoding device can appropriately determine whether the above second condition is satisfied.

For example, the predetermined condition includes a third condition whether an adjacent node adjacent to the first node includes a centroid vertex. Thus, if no face vertex is likely to be generated, the generation of the first control information is omitted. This reduces the data volume of the bitstream.

For example, whether the first face includes the first face vertex indicated in the first control information is determined according to whether a total number or a density of points included in a region located within a predetermined distance from an intersection point is at least a predetermined threshold value, the intersection point being a point of intersection between (i) a line segment connecting the first centroid vertex and a second centroid vertex of a second node adjacent to the first node and (ii) a face shared by the first node and the second node. Thus, whether the face vertex is to be generated is appropriately specified.

For example, the bitstream further includes second control information (e.g., a face-vertex non-transmission flag) indicating whether the first control information for faces of the first node is included in the bitstream. Thus, the decoding device can refer to the second control information to switch between performing and not performing face vertex generation processing using the first control information.

For example, the decoding device generates or does not generate a face vertex on a face to be processed, according to the first control information corresponding to the face to be processed among the faces, when the second control information indicates that the first control information for the faces of the first node is included in the bitstream (e.g., the face-vertex non-transmission flag = 0). The decoding device generates a face vertex on each of the faces when the second control information does not indicate that the first control information for the faces of the first node is included in the bitstream (e.g., the face-vertex non-transmission flag = 1).

Accordingly, when the face vertex is included on each of the faces, the bitstream need not include the first control information. Thus, the data volume of the bitstream can be reduced.

For example, when, among the faces of the first node, all faces that satisfy the predetermined condition satisfy an other predetermined condition, the second control information does not indicate that the first control information for the faces of the first node is included in the bitstream. Accordingly, for example, when the face vertex is generated on each of the faces that satisfy the predetermined condition, the bitstream need not include the first control information. Thus, the data volume of the bitstream can be reduced.

FIG. 45 is a block diagram of decoding device 10. For example, decoding device 10 includes processor 11 and memory 12, and processor 11 performs the above process using memory 12.

The encoding device (the three-dimensional data encoding device) according to the embodiment performs the process shown in FIG. 46. The encoding device: generates geometry information indicating nodes constituting an octree structure (S311); generates first control information indicating whether a first face of a first node included in the nodes includes a first face vertex provided on the first face except for first edges of the first face (S312); and generates a bitstream including the geometry information and the first control information (S313). Each of the nodes is a unit for containing three-dimensional points. The first node includes a first centroid vertex and first edge vertices that are used in a TriSoup scheme. The first face vertex, the first centroid vertex, and the first edge vertices define a triangle (e.g., a TriSoup triangle) on which three-dimensional points in the first node are disposed. The first control information is provided for a face of the first node that satisfies a predetermined condition (e.g., a first condition). In other words, the encoding device generates the first control information for a face that satisfies the predetermined condition, and does not generate the first control information for a face that does not satisfy the predetermined condition.

Thus, providing the first control information for a face that satisfies a predetermined condition reduces the data volume of the bitstream, compared to providing the first control information for all the faces.

For example, the predetermined condition includes a first condition whether the face includes two or three edge vertices. Thus, if no face vertex is likely to be generated, the generation of the first control information is omitted.

For example, the predetermined condition includes a second condition whether a first vector, a second vector, and a third vector point in a same direction. The first vector is a vector from a first center of the first edge vertices to the first centroid vertex. The second vector is a vector from a second center of second edge vertices of a second node to a second centroid vertex of the second node, the second node being adjacent to the first node with the face in contact with the second node. The third vector is a vector from a first line to a tentative face vertex, the first line connecting two edge vertices of the face, the tentative face vertex being disposed in a position at which a second line connecting the first centroid vertex and the second centroid vertex intersects the face. Thus, if no face vertex is likely to be generated, the generation of the first control information is omitted.

For example, when an inner product of the first vector and the third vector is positive and an inner product of the second vector and the third vector is positive, the first vector, the second vector, and the third vector are determined to point in the same direction. Thus, the encoding device can appropriately determine whether the above second condition is satisfied.

For example, the predetermined condition includes a third condition whether an adjacent node adjacent to the first node includes a centroid vertex. Thus, if no face vertex is likely to be generated, the generation of the first control information is omitted.

For example, the encoding device determines whether the first face includes the first face vertex indicated in the first control information, according to whether a total number or a density of points included in a region located within a predetermined distance from an intersection point is at least a predetermined threshold value, the intersection point being a point of intersection between (i) a line segment connecting the first centroid vertex and a second centroid vertex of a second node adjacent to the first node and (ii) a face shared by the first node and the second node. Thus, the encoding device can appropriately specify whether the face vertex is to be generated.

For example, the bitstream further includes second control information (e.g., a face-vertex non-transmission flag) indicating whether the first control information for faces of the first node is included in the bitstream. Thus, the decoding device can refer to the second control information to switch between performing and not performing face vertex generation processing using the first control information.

For example, when, among the faces of the first node, all faces that satisfy the predetermined condition satisfy an other predetermined condition, the encoding device generates the second control information indicating that the first control information for the faces of the first node is not included in the bitstream. Accordingly, for example, when the face vertex is generated on each of the faces that satisfy the predetermined condition, the bitstream need not include the first control information. Thus, the data volume of the bitstream can be reduced.

FIG. 47 is a block diagram of encoding device 20. For example, encoding device 20 includes processor 21 and memory 22, and processor 21 performs the above process using memory 22.

An encoding device (three-dimensional data encoding device), a decoding device (three-dimensional data decoding device), and the like, according to embodiments of the present disclosure and variations thereof have been described above, but the present disclosure is not limited to these embodiments, etc.

Note that each of the processors included in the encoding device, the decoding device, and the like, according to the above embodiments is typically implemented as a large-scale integrated (LSI) circuit, which is an integrated circuit (IC). These may take the form of individual chips, or may be partially or entirely packaged into a single chip.

Such IC is not limited to an LSI, and thus may be implemented as a dedicated circuit or a general-purpose processor. Alternatively, a field programmable gate array (FPGA) that allows for programming after the manufacture of an LSI, or a reconfigurable processor that allows for reconfiguration of the connection and the setting of circuit cells inside an LSI may be employed.

Moreover, in the above embodiments, the constituent elements may be implemented as dedicated hardware or may be realized by executing a software program suited to such constituent elements. Alternatively, the constituent elements may be implemented by a program executor such as a CPU or a processor reading out and executing the software program recorded in a recording medium such as a hard disk or a semiconductor memory.

The present disclosure may also be implemented as an encoding method (three-dimensional data encoding method), a decoding method (three-dimensional data decoding method), or the like executed by the encoding device (three-dimensional data encoding device), the decoding device (three-dimensional data decoding device), and the like.

Furthermore, the present disclosure may be implemented as a program for causing a computer, a processor, or a device to execute the above-described encoding method or decoding method. Furthermore, the present disclosure may be implemented as a bitstream generated by the above-described encoding method. Furthermore, the present disclosure as a recording medium on which the program or the bitstream is recorded. For example, the present disclosure may be implemented as a non-transitory computer-readable recording medium on which the program or the bitstream is recorded.

Also, the divisions of the functional blocks shown in the block diagrams are mere examples, and thus a plurality of functional blocks may be implemented as a single functional block, or a single functional block may be divided into a plurality of functional blocks, or one or more functions may be moved to another functional block. Also, the functions of a plurality of functional blocks having similar functions may be processed by single hardware or software in a parallelized or time-divided manner.

Also, the processing order of executing the steps shown in the flowcharts is a mere illustration for specifically describing the present disclosure, and thus may be an order other than the shown order. Also, one or more of the steps may be executed simultaneously (in parallel) with another step.

An encoding device, a decoding device, and the like, according to one or more aspects have been described above based on the embodiments, but the present disclosure is not limited to these embodiments. The one or more aspects may thus include forms achieved by making various modifications to the above embodiments that can be conceived by those skilled in the art, as well forms achieved by combining constituent elements in different embodiments, without materially departing from the spirit of the present disclosure.

### [Industrial Applicability]

The present disclosure is applicable to an encoding device and a decoding device.

### [Reference Signs List]

10 decoding device
11, 21 processor
12, 22 memory
20 encoding device
101 target space
102, 133 point cloud
103, 111, 132 point
104 leaf-node
112 edge vertex
113, 122 range
121 approximate plane
123 vertex information
131 triangle
151 centroid vertex
161 face vertex

## Claims

1. A decoding method comprising:
receiving a bitstream including geometry information and first control information, the geometry information indicating nodes constituting an octree structure, the first control information indicating whether a first face of a first node included in the nodes includes a first face vertex provided on the first face except for first edges of the first face; and
generating or not generating the first face vertex on the first face according to the first control information,
wherein each of the nodes is a unit for containing three-dimensional points,
the first node includes a first centroid vertex and first edge vertices that are used in a TriSoup scheme,
the first face vertex, the first centroid vertex, and the first edge vertices define a triangle on which three-dimensional points in the first node are disposed, and
the first control information is provided for a face of the first node that satisfies a predetermined condition.

2. The decoding method according to claim 1,
wherein the predetermined condition includes a first condition whether the face includes two or three edge vertices.

3. The decoding method according to claim 1,
wherein the predetermined condition includes a second condition whether a first vector, a second vector, and a third vector point in a same direction,
the first vector is a vector from a first center of the first edge vertices to the first centroid vertex,
the second vector is a vector from a second center of second edge vertices of a second node to a second centroid vertex of the second node, the second node being adjacent to the first node with the face in contact with the second node, and
the third vector is a vector from a first line to a tentative face vertex, the first line connecting two edge vertices of the face, the tentative face vertex being disposed in a position at which a second line connecting the first centroid vertex and the second centroid vertex intersects the face.

4. The decoding method according to claim 3,
wherein when an inner product of the first vector and the third vector is positive and an inner product of the second vector and the third vector is positive, the first vector, the second vector, and the third vector are determined to point in the same direction.

5. The decoding method according to claim 1,
wherein the predetermined condition includes a third condition whether an adjacent node adjacent to the first node includes a centroid vertex.

6. The decoding method according to claim 1,
wherein whether the first face includes the first face vertex indicated in the first control information is determined according to whether a total number or a density of points included in a region located within a predetermined distance from an intersection point is at least a predetermined threshold value, the intersection point being a point of intersection between (i) a line segment connecting the first centroid vertex and a second centroid vertex of a second node adjacent to the first node and (ii) a face shared by the first node and the second node.

7. The decoding method according to claim 1,
wherein the bitstream further includes second control information indicating whether the first control information for faces of the first node is included in the bitstream.

8. The decoding method according to claim 7, further comprising:
generating or not generating a face vertex on a face to be processed, according to the first control information corresponding to the face to be processed among the faces, when the second control information indicates that the first control information for the faces of the first node is included in the bitstream; and
generating a face vertex on each of the faces when the second control information does not indicate that the first control information for the faces of the first node is included in the bitstream.

9. The decoding method according to claim 7,
wherein when, among the faces of the first node, all faces that satisfy the predetermined condition satisfy an other predetermined condition, the second control information does not indicate that the first control information for the faces of the first node is included in the bitstream.

10. An encoding method comprising:
generating geometry information indicating nodes constituting an octree structure;
generating first control information indicating whether a first face of a first node included in the nodes includes a first face vertex provided on the first face except for first edges of the first face; and
generating a bitstream including the geometry information and the first control information,
wherein each of the nodes is a unit for containing three-dimensional points,
the first node includes a first centroid vertex and first edge vertices that are used in a TriSoup scheme,
the first face vertex, the first centroid vertex, and the first edge vertices define a triangle on which three-dimensional points in the first node are disposed, and
the first control information is provided for a face of the first node that satisfies a predetermined condition.

11. A decoding device that decodes three-dimensional points, the decoding device comprising:
a processor; and
memory,
wherein using the memory, the processor:
receives a bitstream including geometry information and first control information, the geometry information indicating nodes constituting an octree structure, the first control information indicating whether a first face of a first node included in the nodes includes a first face vertex provided on the first face except for first edges of the first face; and
generates or does not generate the first face vertex on the first face according to the first control information,
wherein each of the nodes is a unit for containing three-dimensional points,
the first node includes a first centroid vertex and first edge vertices that are used in a TriSoup scheme,
the first face vertex, the first centroid vertex, and the first edge vertices define a triangle on which three-dimensional points in the first node are disposed, and
the first control information is provided for a face of the first node that satisfies a predetermined condition.

12. An encoding device that encodes three-dimensional points, the encoding device comprising:
a processor; and
memory,
wherein using the memory, the processor:
generates geometry information indicating nodes constituting an octree structure;
generates first control information indicating whether a first face of a first node included in the nodes includes a first face vertex provided on the first face except for first edges of the first face; and
generates a bitstream including the geometry information and the first control information,
wherein each of the nodes is a unit for containing three-dimensional points,
the first node includes a first centroid vertex and first edge vertices that are used in a TriSoup scheme,
the first face vertex, the first centroid vertex, and the first edge vertices define a triangle on which three-dimensional points in the first node are disposed, and
the first control information is provided for a face of the first node that satisfies a predetermined condition.
